(19) Europäisches Patentamt
European Patent Office
Office européen des brevets

(11) **EP 1 852 692 A1**

(12) **EUROPEAN PATENT APPLICATION**
published in accordance with Art. 158(3) EPC

(43) Date of publication:
**07.11.2007 Bulletin 2007/45**

(51) Int Cl.:
***G01N 21/17*** (2006.01)

(21) Application number: **06711977.6**

(22) Date of filing: **19.01.2006**

(86) International application number:
**PCT/JP2006/300731**

(87) International publication number:
**WO 2006/077921 (27.07.2006 Gazette 2006/30)**

(84) Designated Contracting States:
**DE FR GB**

(30) Priority: **21.01.2005 JP 2005014650**
**22.04.2005 JP 2005124610**

(71) Applicants:
• **School Juridical Person Kitasato Gakuen**
**Minato-ku**
**Tokyo, 1088641 (JP)**
• **NIPPON TELEGRAPH AND TELEPHONE**
**CORPORATION**
**Tokyo 100-8116 (JP)**

(72) Inventors:
• **OHBAYASHI, Kohji**
**1-chome, Sagamihara-shi, Kanagawa, 2288 (JP)**

• **SHIMIZU, Kimiya**
**1-chome, Sagamihara-shi, Kanagawa, 2288 (JP)**
• **MIYAZAWA, Takeo**
**-cho 3-chome, Musashino-shi, Tokyo, 1808 (JP)**
• **YOSHIMURA, Ryoko**
**-cho 3-chome, Musashino-shi, Tokyo, 1808 (JP)**
• **ISHII, Hiroyuki**
**-cho 3-chome, Musashino-shi, Tokyo, 1808 (JP)**

(74) Representative: **Turner, James Arthur**
**D Young & Co**
**120 Holborn**
**London EC1N 2DY (GB)**

(54) **OPTICAL COHERENT TOMOGRAPHY DEVICE**

(57) There is provided an optical coherence tomography system capable of enlarging a measurement range by removing the affect of a folded image. The system comprises an optical phase modulator (14) enabling differential amplifiers (17, 18) and a calculation control device (21) to measure a first intensity serving as a cosine function against the wave number and a second intensity serving as a sine function against the wave number or a reverse-sign function thereof from the intensity of the output light combined by a third coupler (16), and the calculation control device (21) identifies the reflection or backscattering position and the reflection intensity or backscattering intensity of the measurement light in the irradiation direction of the measurement light on the measurement subject while suppressing generation of a folded image on the basis of a first intensity set and a second intensity set of the output light measured by differential amplifiers (17, 18)and the like, and produced by the optical phase modulator (14).

FIG. 1

EP 1 852 692 A1

**Description**

<u>TECHNICAL FIELD</u>

The present invention relates to an optical coherence tomography system for measuring a tomographic image of various structures, such as a coating film, for example, and organisms using an optical interference phenomenon.

<u>BACKGROUND ART</u>

(1) Features of OFDR-OCT method

Optical coherence tomography (OCT) is amethodof capturing a tomographic image of a structure such as a coating film or an organism using an optical interference phenomenon (Non-patent Document 1).

OCT has already been put to practical use in the field of medicine to capture tomographic images of microscopic tissues such as the retina using a high resolution of several tens of $\mu$m. The active reason for this use of OCT is its high resolution, but a passive reason also exists. Specifically, mechanically driven parts exist in the measurement system, and therefore OCT is unsuited to high-speed measurement. Hence, the measurable range during the short amount of time that the organism is stationary is limited to a narrow depth direction region of 1 to 2mm at most.

To solve this problem, the present inventors have developed a novel OCT method (Non-patent Document 2), and have succeeded in measuring the wide range of an anterior eye portion (Non-patent Document 5). This method is a completely new method employing a wavelength tunable light source as a light source, and since no mechanically driven parts exist, extremely high-speed measurement is possible. The present inventors call this method OFDR-OCT (Optical frequency domain reflectometry OCT).

This method will now be described. Note that a conventional OCT method will be referred to as OCDR-OCT (Optical coherence domain reflectometry OCT).

(2) Constitution of OFDR-OCT system

Fig. 21 shows a system for capturing a tomographic image of an anterior eye portion using the OFDR-OCT method developed by the present inventors.

A light emission port of a wavelength tunable light source 171 serving as wavelength tunable light generating means capable of illuminating light while varying the wavelength thereof, such as super-structure grating distributed Bragg reflector laser (Non-patent Document 3), is optically connected to a light reception port of a first coupler 172 constituted by a directional coupler or the like for dividing light into two (at 90:10, for example).

A light transmission port on one side (the 90% divided proportion side) of the first coupler 172 constituted by a directional coupler or the like is optically connected to a light reception port of a second coupler 173 serving as dividing means constituted by a directional coupler or the like for dividing light into two (at 70:30, for example).

A light transmission port on one side (the 70% divided proportion side) of the second coupler 173 is optically connected to a light reception port of advancement direction controlling means constituted by an optical circulator 175 (to be abbreviated to circulator hereafter). Alight transmission port on the other side (the 30% divided proportion side) of the second coupler 173 is optically connected to a light reception port of a third coupler 176 serving as combining means constituted by a directional coupler or the like for dividing light into two (at 50: 50, for example) . Alight transmission port of the circulator 175 is optically connected to a light reception port of the third coupler 176. Further, a light transmission/ light reception port of the circulator 175 is connected to a measurement head 190 (measurement light illuminating means) such as that shown in Fig. 22. The measurement head 190 also functions as means (signal light collecting means) for collecting signal light formed when measurement light is reflected or backscattered by an eye 196 serving as a measurement subject. In other words, the measurement head 190 serves as measurement light illuminating/signal light collecting means.

As shown in Fig. 22, the measurement head 190 is constituted by a collimator lens 192 for shaping measurement light that has passed through an optical fiber into parallel beams, a focusing lens 194 for converging the parallel beams on the anterior eye portion, and a galvanometer mirror 193 for scanning the advancement direction of the measurement light.

The measurement head 190 is mounted in an empty space formed by removing a slit light (narrow gap light) irradiation system from a slit-lamp microscope 195 supported by a support 185. The measurement light can be guided to the vicinity of a desired position on the eye 196 of a test subject using the positioning function of the slit-lamp microscope 195.

As shown in Fig. 21, light transmission ports on one side and another side of the third coupler 176 are optically connected to light reception ports of a first differential amplifier 177 having a light detection function. A logarithmic output portion of the first differential amplifier 177 is electrically connected to one input portion of a second differential amplifier 178 for correctively calculating variation in the intensity of an input signal.

Meanwhile, a light transmission port on the other side (the 10% divided proportion side) of the first coupler 172 is optically connected to a light reception port of a photodetector 179. An output portion of the photodetector 179 is electrically connected to an input portion of a logarithmic amplifier 180. A logarithmic output portion of the logarithmic amplifier 180 is electrically connected to another input portion of the second differential amplifier 178.

An output portion of the second differential amplifier 178 is electrically connected to an input portion of a calculation control device 181 for synthesizing a coherence interference waveform, or in other words a reflection or backscattering intensity distribution, via an analog/digital converter, not shown in the drawing. An output portion of the calculation control device 181 is electrically connected to an input portion of a display device 182 such as a monitor or printer for displaying a calculation result. The calculation control device 181 is constituted to be capable of controlling the wavelength tunable light source 171 and the galvanometer mirror 193 on the basis of input information.

(3) Measurement principles of OFDR-OCT

Signal light generated when measurement light (the laser light divided at 70% by the second coupler 173) is reflected or backscattered by a measurement subject, for example an anterior eye portion, is combined by the third coupler 176 so as to interfere with reference light (the wavelength tunable light divided at 30% by the second coupler 173).

The combined light is the sum of a direct current component and an interference component, but the first differential amplifier 177 extracts only the interference component. The following Equation (1) expresses the magnitude of an interference component $I_d(k_i)$ detected by the first differential amplifier 177 in a case where the measurement subject has only one reflection surface 205, as in Fig. 23.

$$I_d(k_i) = 2\sqrt{I_r I_s} \cos(2L \times k_i) \quad \cdots \quad (1)$$

2L is the difference between an optical path length (obtained by multiplying the traveled distance of the light by the refractive index; likewise hereafter) traveled by first divided light (division ratio 70%), which is divided by the second coupler 173, prior to combining by the third coupler 176, and an optical path length traveled by second divided light (division ratio 30%), or in other words the reference light. $k_i$ is a wave number ($=2\pi/\lambda$, where $\lambda$ is the wavelength) of the $i^{th}$ beam emitted by the wavelength tunable light source 171. $I_s$ and $I_r$ are the intensity of the light (signal light) reflected or backscattered by the measurement subject and the intensity of the reference light, respectively. The first differential amplifier 177 generates an output (more precisely, a logarithm) proportionate to $I_d(k_i)$, and the second differential amplifier 178 corrects fluctuation in the output of the wavelength tunable light source 171.

Fig. 23 shows a case in which the reflection surface 205 exists in a position that is removed from a position in which 2L=0 by a distance D. The light reflected by the reflection surface 205 travels a distance of 2D before returning to the position of 2L=0, and therefore 2L=2D in the position of the reflection surface. Accordingly, the value of L corresponding to the position of the reflection surface is D.

A tomographic image is synthesized by having the calculation control device 181 subject $I_d(k_i)$ to Fourier transform. The process for constructing a tomographic image will now be described.

First, Fourier cosine transform and Fourier sine transform are performed with respect to $I_d(k_i)$. In other words, the following Equations (2) and (3) are calculated.

$$Y_c(z) = \sum_{i=1}^{N} I_d(k_i) \times \cos(k_i \times z) \quad \cdots \quad (2)$$

$$Y_s(z) = \sum_{i=1}^{N} I_d(k_i) \times \sin(k_i \times z) \quad \cdots \quad (3)$$

Here, z is a positional coordinate. N is a total number of the wave numbers emitted from the wavelength tunable light source 171. When a wave number spacing is $\Delta k$ and a wave number scan starting point is $k_0 + \Delta k$, $k_i$ is expressed by the following Equation (4). Note that i=1, 2, ..., N.

$$k_i = k_0 + \Delta k \times i \quad \cdots \quad (4)$$

Next, the following $Y_t(z)$ is obtained from the calculated $Y_c(z)$ and $Y_s(z)$.

$$Y_t^2(z) = Y_c^2(z) + Y_s^2(z) \quad \cdots \quad (5)$$

$Y_t^2(z)$ of Equation (5), or the square root $Y_t(z)$ thereof, expresses the distribution of the reflection intensity (or backscattering intensity) of the reflection surface (or scattering surface) in the depth direction of the measurement subject. In this example, where only one reflection surface exists, a reflection distribution intensity expressed by the following Equation (6) is obtained.

$$Y_t^2(z) = I_r I_s \left\{ \frac{\sin\left[\frac{(z-2L)}{2} \times N \times \Delta k\right]}{\sin\left[\frac{(z-2L)}{2} \times \Delta k\right]} \right\}^2 + I_r I_s \left\{ \frac{\sin\left[\frac{(z+2L)}{2} \times N \times \Delta k\right]}{\sin\left[\frac{(z+2L)}{2} \times \Delta k\right]} \right\}^2 + B(z)$$

$$\cdots \quad (6)$$

Here, $B(z)$ is expressed by the following Equation (7), and forms a part of a noise floor.

$$B(z) = 2 I_r I_s \cos\left\{ \left( k_0 + \frac{N+1}{2} \times \Delta k \right) \times 2L \right\}$$

$$\times \frac{\sin\left[\frac{(z-2L)}{2} \times N \times \Delta k\right]}{\sin\left[\frac{(z-2L)}{2} \times \Delta k\right]} \frac{\sin\left[\frac{(z+2L)}{2} \times N \times \Delta k\right]}{\sin\left[\frac{(z+2L)}{2} \times \Delta k\right]} \quad \cdots \quad (7)$$

When $x = (z-2L)/2 \times \Delta k$ in the first term of Equation (6), the first term becomes $(\sin(N \times x)/\sin x)^2$.

In this equation, $x=0$, or in other words a large value $N^2$ is obtained at $z=2L$, and this value approaches zero rapidly as it departs from $z=2L$. Likewise in the second term, a large value $N^2$ is obtained at $z=-2L$, and this value approaches zero rapidly as it departs from $z=-2L$. In other words, in these terms, a folded image is generated.

Hence, by taking $x=z/2$ on the abscissa and plotting $Y_t^2(2x)$ on the ordinate y, $y=N^2 \times I_r \times I_s$ is obtained at $x=\pm L$, and substantially zero is obtained in all other positions.

Typically, the optical path length is adjusted such that no measurement subject exists at $x<0$, and $Y_t^2(2x)$ is plotted only in relation to $x\geq 0$. Hence, even when $Y_t^2(2x)$ is plotted in relation to x, a folded image does not appear, and by means of this plotting, the depth direction distribution of the reflection (or backscattering) intensity can be obtained.

Non-patent Document 1: Chan Kin Pui OPTRONICS (2002), N07, 179.
Non-patent Document 2: T. Amano, H. Hiro-Oka, D. Choi, H. Furukawa, F. Kano, M. Takeda, M. Nakanishi, K. Shimizu, K. Obayashi, Proceeding of SPIE, Vol. 5531, p. 375, 2004.
Non-patent Document 3: Yuzo YOSHIKUNI, OYO BUTURI Vol. 71, No. 11 (2002), p. 1362 through 1366.
Non-patent Document 4: Handbook of Optical Coherence Tomography, edited by Brett E. Bouma and Guillermo J. Tearney, p. 364 through p.367

Non-patent Document 5: Program/Abstract of 40th Japanese Society of Ophthalmological Optics and 19th Japanese Association of Opthalmic ME Joint General Assembly, 2004 p. 61.

DISCLOSURE OF THE INVENTION

PROBLEMS TO BE SOLVED BY THE INVENTION

(A) First Optical Coherence Tomography System

The first term and second term of Equation (6) are periodic functions relating to z, and the period thereof is $2\pi/\Delta k$. Hence, by correcting Equation (6) into a depth direction coordinate, or in other words a function of x, a periodic function having a period of $\pi/\Delta k$ is obtained.

By ignoring the effect of the second term of Equation (6), an image of the measurement subject existing within the period is constructed in the correct position, and therefore it may be said that this period is the measurable range of OFDR-OCT (in an actual measurement, of course, living tissue or the like exists in deeper positions than the period, but the intensity of the reflection light (or backscattered light) weakens rapidly in the depth direction, and therefore this tissue does not impede measurement).

As shown in Fig. 7, however, with the OFDR-OCTR method previously proposed by the present inventors, an image 202 appears at x=-L and x= $(\pi/\Delta k)$ -L due to the existence of the second term, in addition to a normal image 201. This does not pose a problem when L is small, but when L exceeds $\pi/(2\Delta k)$, the normal image 201 produced by the first term appears at half $\pi/\Delta k$, i.e. in a larger position than $\pi/(2\Delta k)$, as shown in Fig. 8, while the folded image 202 produced by the second term appears in a smaller position than $\pi/(2\Delta k)$. In other words, the normal image 201 and the folded image position 202 cross. As a result, an image can be constructed in the correct position using OFDR-OCT only when the surface for reflecting (or backscattering) the measurement light exists at $0<x<\pi/(2\Delta k)$.

Hence, in OFDR-OCT, the problematic folded image 202 occurs when the measurable range is half the value expected from the period $\pi/\Delta k$ of the first term. An object of the present invention is to enlarge the measurement range of OFDR-OCT by removing the effect of such a folded image.

(B) Second Optical Coherence Tomography System

(1) Relationship between dynamic range and measurement limit of depth direction

An important factor in determining the performance of the OCT method is the dynamic range.

The dynamic range is the ratio between noise and signal intensity, and the logical limit thereof is otbatined by the maximum value $N^2$ of the signal intensity (Equation (6)) and the intensity ratio of the noise floor (the value of Equation (6) when z>>0).

Fig. 24 illustrates variation in the signal intensity (Equation (6)) relative to the positional coordinate x of the depth direction. The abscissa shows the positional coordinate x in the depth direction of the measurement subject, and the ordinate shows the logarithm of the signal intensity $Y_t^2(2x)$ expressed in Equation (6) (normalized by a value of $Y_t^2(0)$. The drawing shows an example in which $Y_t^2(2x)$ has a maximum value at L=0, i.e. x=0, and is plotted relative to $x{\geq}0$ (in other words, only one half of a peak 211 of the signal intensity is shown).

In almost all cases, the reflection light intensity of an OFDR-OCT signal from the surface of living tissue or the like is considerably stronger than the backscattered light intensity from the interior. Hence, the noise floor of the surface reflection peak impedes measurement of the backscattered light from the interior of the measurement subject. This condition will now be described specifically using Fig. 24. It is assumed that the surface exists in a position of L=0, and that the peak 211 illustrates an OFDR-OCT signal produced by surface reflection. It is also assumed that the backscattering rate in the measurement subject interior (the ratio of the intensity of the backscattered light to the intensity of the measurement light that enters the scatterer) and the reflectivity of the measurement subject surface are equal. The measurement light is scattered as it advances through the measurement subject interior, and decreases exponentially. Therefore, the peak intensity of the OFDR-OCT signal from the scatterer in the measurement subject interior decreases linearly in the depth direction, as shown by an attenuation line 213 in Fig. 24.

A noise floor 212 produced by surface reflection decreases only gently relative to the positional coordinate x, and therefore the noise floor 212 and the attenuation line 213 eventually intersect. In deeper positions than an intersection point 214, the noise floor 212 is stronger than the OFDR-OCT signal 213 from the measurement subject interior.

Hence, a tomographic image cannot be captured in deeper positions than the intersection point 214. In other words, tomographic image capturing is possible in steadily deeper positions as the ratio of the peak 212 to the noise floor 212, i.e. the dynamic range, increases.

(2) Actual dynamic range

The noise floor obtained in Equation (6) can be reduced dramatically by multiplying a window function (a Gauss function, for example) by the measurement value $I_d(k_i)$ when calculating $Y_c(z)$ and $Y_s(z)$ in Equations (2) and (3) (note, however, that in so doing, the resolution deteriorates; see Japanese Patent Application No. 2004-202957). However, when an OFDR-OCT signal from living tissue is measured using the system shown in Fig. 21, and the noise floor is evaluated with 0dB as the signal intensity of the tissue surface, on which the reflection light intensity is typically greatest, the measurement value reaches -45dB or more even when the logical noise floor value is set at -70dB using an appropriate window function, and thus the measurement value is considerably larger than the expected value of -70dB. Hence, in a conventional OFDR-OCT system, a sufficient measurement range cannot be obtained.

(3) Problems to be solved by the present invention

The present invention has been designed in consideration of the problems described above, and it is an object thereof to provide an optical coherence tomography system from which the causes of dynamic range deterioration are removed so that the measurement range thereof can be increased.

MEANS FOR SOLVING THE PROBLEM

(A) First optical coherence tomography system

To solve the problems described above, a first invention is an optical coherence tomography system comprising: wavelength tunable light generating means; dividing means for dividing light output from the wavelength tunable light generating means into measurement light and reference light; illuminating means for illuminating a measurement subject with the measurement light; collecting means for collecting signal light reflected or backscattered by the measurement subject; combining means for combining the signal light and the reference light; measuring means for measuring an intensity of output light combined by the combining means at each wave number of the wavelength tunable light generating means; and identifying means for identifying, on the basis of an intensity set of the output light measured at each wave number, a reflection or backscattering position and a reflection intensity or backscattering intensity of the measurement light in an irradiation direction of the measurement light on the measurement subject, wherein phase shifting means are provided for enabling the measuring means to measure a first intensity serving as a cosine function against the wave number and a second intensity serving as a sine function against the wave number or a reverse-sign function thereof from the intensity of the output light combined by the combining means, and the identifying means identify the reflection or backscattering position and the reflection intensity or backscattering intensity of the measurement light in the irradiation direction of the measurement light on the measurement subject while suppressing generation of a folded image on the basis of a first intensity set and a second intensity set of the output light measured by the measuring means and produced by the phase shifting means.

A second invention is the optical coherence tomography system pertaining to the first invention, wherein, when the measurement subject has only one reflection surface, the identifying means calculate at least one of a cosine function and a sine function from the first intensity and the second intensity of a value of $k(z-2L)$ or $k(z+2L)$ (where z is a variable, and 2L is a value obtained by subtracting an optical path length of the reference light from a sum of an optical path length of the measurement light and an optical path length of the signal light) for each wave number k of the light output from the wavelength tunable light generating means, obtain a proportionate function proportionate to the function, and then obtain a sum total of the proportionate functions calculated for each of the wave numbers k.

A third invention is the optical coherence tomography system pertaining to the first or second invention, wherein the identifying means perform a first Fourier cosine transform and a first Fourier sine transform on the first intensity set, perform a second Fourier cosine transform and a second Fourier sine transform on the second intensity component set while maintaining a sign thereof as is when the second intensity varies as a sine function, and perform the second Fourier cosine transform and the second Fourier sine transform on the second intensity set after reversing the sign thereof when the second intensity is a reverse-sign function of the sine function.

A fourth invention is the optical coherence tomography system pertaining to the third invention, wherein the identifying means obtain a sum of the first Fourier cosine transform and the second Fourier sine transform, obtain a difference between the first Fourier sine transform and the second Fourier cosine transform, and obtain a sum of a square of the sum and a square of the difference.

A fifth invention is the optical coherence tomography system pertaining to the third invention, wherein the identifying means obtain a difference between the first Fourier cosine transform and the second Fourier sine transform, obtain a sum of the first Fourier sine transform and the second Fourier cosine transform, and obtain a sum of a square of the sum and a square of the difference.

A sixth invention is the optical coherence tomography system pertaining to the third invention, wherein the identifying means obtain a sum of the first Fourier cosine transform and the second Fourier sine transform, and remove a high frequency component of the sum.

A seventh invention is the optical coherence tomography system pertaining to the third invention, wherein the identifying means obtain a difference between the first Fourier cosine transform and the second Fourier sine transform, and remove a high frequency component of the difference.

An eighth invention is the optical coherence tomography system pertaining to any of the first through seventh inventions, wherein the phase shifting means are constituted by an optical phase modulator disposed on an optical path of any one of the measurement light, the reference light, and the signal light.

A ninth invention is the optical coherence tomography system pertaining to any of the first through eighth inventions, wherein the dividing means and the combining means are combined.

A tenth invention is the optical coherence tomography system pertaining to any of the first through ninth inventions, wherein the illuminating means and the collecting means are combined.

(B) Second optical coherence tomography system

An eleventh invention for solving the problems described above is an optical coherence tomography system comprising: wavelength tunable light generating means; dividing means for dividing output light from the wavelength tunable light generating means into measurement light and reference light; measurement light illuminating/signal light collecting means for illuminating a measurement subject with the measurement light and collecting signal light generated when the emitted measurement light is reflected or backscattered by the measurement subject; a bi-directional optical path connected to the measurement light illuminating/signal light collecting means, along which the measurement light and the signal light travel in opposite directions; advancement direction controlling means having a light reception port into which the measurement light divided by the dividing means is input, a light transmission/light reception port from which the input measurement light is output to the bi-directional optical path and into which the signal light is input from the bi-directional optical path, and a light transmission port from which the input signal light is output; combining means for combining the signal light and the reference light; measuring means for measuring an intensity of output light from the combining means; and identifying means for identifying, from an intensity of the output light from the combining means measured by the measuring means, a position in which the measurement light is reflected or backscattered by the measurement subject and a reflection intensity or backscattering intensity in that position in a depth direction of the measurement subject, wherein interference preventing means are provided for preventing leakage light generated when the measurement light leaks directly from the light reception port into the light transmission port of the advancement direction controlling means from interfering with the reference light.

A twelfth invention for solving the problems described above is the optical coherence tomography system pertaining to the eleventh invention, wherein the interference preventing means are constituted by an optical path set such that an optical path length of the reference light from the dividing means to the combining means is longer than a sum of an optical path length of the measurement light from the dividing means to the advancement direction controlling means and an optical path length of the signal light from the advancement direction controlling means to the combining means by at least a maximum value of a coherence length of each output light of the wavelength tunable light generating means.

A thirteenth invention for solving the problems described above is the optical coherence tomography system pertaining to the twelfth invention, wherein an optical path length of the bi-directional optical path is set such that a sum of an optical path length of the measurement light from the dividing means to the measurement subject via the advancement direction controlling means and the bi-directional optical path and an optical path length of the signal light from the measurement subject to the combining means via the bi-directional optical path and the advancement direction controlling means is substantially equal to the optical path length of the reference light from the dividing means to the combining means.

For example, when the sum of the optical path length of the measurement light from the dividing means to the advancement direction controlling means and the optical path length of the signal light from the advancement direction controlling means to the combining means is equal to the optical path length of the reference light from the dividing means to the combining means, the sum of the optical path length of the measurement light from the dividing means to the measurement light illuminating/signal light collecting means via the advancement direction controlling means and bi-directional optical path and the optical path length of the signal light from the measurement light illuminating/signal light collecting means to the combining means via the bi-directional optical path and advancement direction controlling means can be made substantially equal to the optical path length of the reference light from the dividing means to the combining means by setting the optical path length of the bi-directional optical path to half the optical path length of the reference light from the dividing means to the combining means.

A fourteenth invention for solving the problems described above is the optical coherence tomography system pertaining to any of the eleventh through thirteenth inventions, wherein the interference preventing means attenuate the leakage light of the measurement light incident on the light reception port of the advancement direction controlling means by at least 60dB.

A fifteenth invention for solving the problems described above is the optical coherence tomography system pertaining to any of the eleventh, twelfth, and fourteenth inventions, wherein, when the sum of the optical path length of the measurement light from the dividing means to the advancement direction controlling means and the optical path length of the signal light from the advancement direction controlling means to the combining means is different from the optical path length of the reference light from the dividing means to the combining means, the interference preventing means serve as intermittent extinguishing means for extinguishing the output light from the wavelength tunable light generating means intermittently so that the leakage light and the reference light do no enter the combining means simultaneously.

A sixteenth invention for solving the problems described above is the optical coherence tomography system pertaining to any of the eleventh through fifteenth inventions, wherein the combining means comprise: a first output port for outputting interference light constituted by a first component having a fixed optical intensity against a wave number of the wavelength tunable light generating means and a second component having an optical intensity that oscillates against the wave number, when an intensity of the signal light and an intensity of the reference light are fixed, regardless of the wave number; and a second output port for outputting interference light constituted by a third component having a fixed optical intensity against the wave number and a fourth component having an optical intensity that oscillates against the wave number and an opposite phase to the second component, when the intensity of the signal light and the intensity of the reference light are fixed, regardless of the wave number, and the measuring means comprise a first input port to which the first output port is optically connected and a second input port to which the second output port is optically connected, and measure a difference between an intensity of light incident on the first input port and an intensity of light incident on the second input port.

A seventeenth invention for solving the problems described above is the optical coherence tomography system pertaining to the sixteenth invention, wherein reflection preventing means for preventing light reflected by the first input port from returning to the first output port are provided between the first output port and the first input port, and other reflection preventing means for preventing light reflected by the second input port from returning to the second output port are provided between the second output port and the second input port.

An eighteenth invention for solving the problems described above is the optical coherence tomography system pertaining to the sixteenth or seventeenth invention, wherein adjusting means are provided for reducing a difference between the first component and the third component, measured by the measuring means.

A nineteenth invention for solving the problems described above is the optical coherence tomography system pertaining to the eighteenth invention, wherein a tunable optical attenuator is used as the adjusting means, and the tunable attenuator is disposed at least between the first output port and the first input port or between the second output port and the second input port.

A twentieth invention for solving the problems described above is the optical coherence tomography system pertaining to the eighteenth invention, wherein the adjusting means reduce the difference between the first component and the third component by weighting one or both of the intensity of the light incident on the first input port and the intensity of the light incident on the second input port.

A twenty-first invention for solving the problems described above is the optical coherence tomography system pertaining to any of the eleventh through twentieth inventions, wherein the wavelength tunable light generating means are constituted by a wavelength tunable laser.

A twenty-second invention for solving the problems described above is the optical coherence tomography system pertaining to any of the eleventh through twenty-first inventions, wherein the measuring means are means for measuring the intensity of the output light from the combining means at each wave number of the wavelength tunable light generating means, and the identifying means identify, from an intensity set of the output light from the combining means measured at each of the wave numbers by the measuring means, the position in which the measurement light is reflected or backscattered by the measurement subject, and the reflection intensity or backscattering intensity in this position, in the depth direction of the measurement subject.

A twenty-third invention for solving the problems described above is the optical coherence tomography system pertaining to the twenty-second invention, wherein the identifying means identify the reflection intensity or backscattering intensity in the depth direction of the measurement subject by subjecting the intensity of the output light from the combining means measured at each of the wave numbers by the measuring means and a combination of real numbers constituted by the wave number to Fourier transform.

A twenty-fourth invention for solving the problems described above is the optical coherence tomography system pertaining to the twenty-second invention, wherein the measuring means are capable of measuring both a first output light intensity, in which the intensity of the output light from the combining means varies as a cosine function against the wave number, and a second output light intensity, in which the intensity of the output light from the combining means varies as a sine function against the wave number or a reverse-sign function thereof, and the identifying means identify, from a first output light intensity set and second output light intensity set, the position in which the measurement light is reflected or backscattered by the measurement subject and the reflection intensity or backscattering intensity in this position in the depth direction of the measurement subject without folding.

A twenty-fifth invention for solving the problems described above is the optical coherence tomography system pertaining to the twenty-fourth invention, wherein, when the measurement subject has only one reflection surface, z is a variable indicating a positional coordinate, and 2L is a value obtained by subtracting the optical path length of the reference light from the dividing means to the combining means from the sum of the optical path length of the measurement light from the dividing means to the measurement subject and the optical path length of the signal light from the measurement subject to the combining means, the identifying means calculate a function proportionate to one or both of a cosine function and a sine function from the first output light intensity and the second output light intensity of only one of $k \times (z-2L)$ and $k \times (z+2L)$ for each wave number k of the output light of the wavelength tunable light generating means, and identify the reflection intensity or backscattering intensity in the depth direction of the measurement subject without folding by obtaining a sum total of the functions calculated for each of the wave numbers k.

EFFECTS OF THE INVENTION

(A) First optical coherence tomography system

According to the optical coherence tomography system of the present invention, a tomographic image exhibiting no folding can be constructed in an OCT system for obtaining a tomographic image by subjecting an interference signal in an optical frequency domain to Fourier transform. Further, a noise floor generated in accompaniment with the Fourier transform can be reduced.

(B) Second optical coherence tomography system

According to the present invention, the interference preventing means are used, and therefore deterioration of the dynamic range can be prevented, and the measurement range (measurement depth) of OFDR-OCT can be enlarged. Furthermore, by applying the interference preventing means of the present invention to another OCT method that uses a wavelength tunable laser light source (for example, a chirp OCT method (Non-patent Document 4)), deterioration of the dynamic range in the other OCT method can be prevented, and the measurement range thereof can be enlarged.

BRIEF DESCRIPTION OF THE DRAWINGS

Fig. 1 is a schematic diagram showing the overall constitution of an embodiment of an optical coherence tomography system according to the present invention.
Fig. 2 is a schematic diagram of a measurement head in the optical coherence tomography system of Fig. 1.
Fig. 3 is an illustrative view of the actions of a directional coupler.
Fig. 4 is a time chart showing the wave number of light emitted from a wavelength tunable light source and phase modulation of reference light.
Fig. 5 is a graph illustrating observation results obtained using the optical coherence tomography system according to the present invention.
Fig. 6 is a graph showing observation results obtained using a conventional OFDR-OCT method.
Fig. 7 is a graph showing observation results obtained using a conventional OFDR-OCT method.
Fig. 8 is another graph showing observation results obtained using a conventional OFDR-OCT method.
Fig. 9 is a view illustrating a procedure for identifying a reflection light generation point in an optical component of the optical coherence tomography system.
Fig. 10 is a view showing a state in which an attenuator is inserted into the optical component of the optical coherence tomography system.
Fig. 11 is a view showing a state in which a connector is removed from a circulator of the optical coherence tomography system in order to identify the reflection light generation point.
Fig. 12 is a view showing a state in which an optical path length is increased in the optical coherence tomography system.
Fig. 13 is a view illustrating a Michelson interferometer for measuring a coherence length.
Fig. 14 is a schematic diagram showing an embodiment of the optical coherence tomography system according to the present invention.

Fig. 15 is a schematic diagram of a measurement head in the optical coherence tomography system of Fig. 14.
Fig. 16 is a view illustrating adjustment of an attenuator in the optical coherence tomography system of Fig. 12.
Fig. 17 is a time chart of the wave number of light emitted from the wavelength tunable light source.
Fig. 18 is a view showing a weighted differential amplifier.
Fig. 19 is a schematic diagram showing another embodiment of the optical coherence tomography system according to the present invention.
Fig. 20 is a time chart showing the wave number of light emitted from the wavelength tunable light source and phase modulation of reference light.
Fig. 21 is a schematic diagram showing a conventional optical coherence tomography system.
Fig. 22 is a schematic diagram of a measurement head in the optical coherence tomography system of Fig. 21.
Fig. 23 is a view illustrating measurement principles of the conventional optical coherence tomography system.
Fig. 24 is a graph illustrating variation in signal intensity in a depth direction positional coordinate.

DESCRIPTION OF REFERENCE SYMBOLS

| | |
|---|---|
| 11 | wavelength tunable light source |
| 12 | first coupler |
| 13 | second coupler |
| 14 | optical phase modulator |
| 15 | optical circulator |
| 16 | third coupler |
| 17 | first differential amplifier |
| 18 | second differential amplifier |
| 19 | photodetector |
| 20 | logarithmic amplifier |
| 21 | calculation control device |
| 22 | display device |
| 40 | measurement head |
| 41 | main body tube |
| 41a | input/output optical window |
| 42 | collimator lens |
| 43 | galvanometer mirror |
| 44 | focusing lens |
| 50 | support |
| 51 | movable stage |
| 52,53 | support arm |
| 60 | slit-lamp microscope |
| 100 | eye |
| 131 | wavelength tunable light source |
| 132 | first coupler |
| 133 | second coupler |
| 134 | optical phase modulator |
| 135 | optical circulator |
| 136 | third coupler |
| 137 | first differential amplifier |
| 138 | second differential amplifier |
| 139 | photodetector |
| 140 | logarithmic amplifier |
| 141 | calculation control device |
| 142 | display device |
| 143, 144 | optical fiber |
| 145, 146 | tunable isolator |
| 147 | tunable attenuator |
| 150 | measurement head |
| 152 | collimator lens |
| 153 | galvanometer mirror |

| 154 | focusing lens |
| 160 | support |
| 161 | movable stage |
| 165 | microscope |

BEST MODES FOR CARRYING OUT THE INVENTION

(A) First optical coherence tomography system

Embodiments of an optical coherence tomography system according to the present invention will be described below on the basis of the drawings. However, the optical coherence tomography system according to the present invention is not limited to the following embodiments.

[Cause of problems]

To solve the problems described above, it is important first to clarify the reason why the second term of Equation (6) occurs.

Equation (6) is obtained by inserting Equation (2) and Equation (3) into Equation (5). Equation (2) and Equation (3) are calculated on the basis of the measurement value $I_d(k_i)$ produced by a differential amplifier 17. $I_d(k_i)$ is expressed by Equation (1), and therefore, by inserting Equation (1) into Equation (2) and Equation (3), the following is obtained.

$$Y_c(z) = \sum_{i=1}^{N} I_d(k_i) \times \cos(k_i \times z) = \sum_{i=1}^{N} 2\sqrt{I_r I_s} \times \cos(2L \times k_i) \times \cos(k_i \times z)$$

$$= \sqrt{I_r I_s} \times \sum_{i=1}^{N} \cos\{k_i \times (Z-2L)\} + \sqrt{I_r I_s} \times \sum_{i=1}^{N} \cos\{k_i \times (Z+2L)\}$$

$$= \sqrt{I_r I_s} \times \cos\left[(Z-2L) \times \left(K_0 + \frac{N+1}{2}\Delta k\right)\right] \times \frac{\sin\left[\frac{Z-2L}{2} \times N \times \Delta k\right]}{\sin\left[\frac{Z-2L}{2} \times \Delta k\right]}$$

$$+ \sqrt{I_r I_s} \times \cos\left[(Z+2L) \times \left(k_0 + \frac{N+1}{2}\Delta k\right)\right] \times \frac{\sin\left[\frac{Z+2L}{2} \times N \times \Delta k\right]}{\sin\left[\frac{Z+2L}{2} \times \Delta k\right]}$$

$$\cdots\cdots (8)$$

$$Y_s(z) = \sum_{i=1}^{N} I_d(k_i) \times sin(k_i \times z) = \sum_{i=1}^{N} 2\sqrt{I_r I_s} \times cos(2L \times k_i) \times sin(k_i \times z)$$

$$= \sqrt{I_r I_s} \times \sum_{i=1}^{N} sin\{k_i \times (Z-2L)\} + \sqrt{I_r I_s} \times \sum_{i=1}^{N} sin\{k_i \times (Z+2L)\}$$

$$= \sqrt{I_r I_s} \times sin\left[(Z-2L) \times \left[K_0 + \frac{N+1}{2}\Delta k\right]\right] \times \frac{sin\left[\frac{Z-2L}{2} \times N \times \Delta k\right]}{sin\left[\frac{Z-2L}{2} \times \Delta k\right]}$$

$$+ \sqrt{I_r I_s} \times sin\left[(Z+2L) \times \left[K_0 + \frac{N+1}{2}\Delta k\right]\right] \times \frac{sin\left[\frac{Z+2L}{2} \times N \times \Delta k\right]}{sin\left[\frac{Z+2L}{2} \times \Delta k\right]}$$

$$\cdots\cdots (9)$$

A following Equation (9') is used to calculate the above equation. Note that j is an imaginary unit.

$$\sum_{i=1}^{N} e^{ji\gamma} = \frac{e^{j\gamma} - e^{j(n+1)\gamma}}{1 - e^{j\gamma}} = \frac{e^{j\left(\frac{N}{2}+1\right)\gamma}}{e^{j\frac{\gamma}{2}}} \cdot \frac{\frac{e^{j\frac{N}{2}\gamma} - e^{-j\frac{N}{2}\gamma}}{2}}{\frac{e^{j\frac{\gamma}{2}} - e^{-j\frac{\gamma}{2}}}{2}} \qquad \cdots\cdots (9')$$

$$= e^{j\frac{N+1}{2}\gamma} \frac{sin\left(\frac{N}{2}\gamma\right)}{sin\left(\frac{1}{2}\gamma\right)}$$

As is evident from Equation (8), the second term on the right side of Equation (6), which produces a folded image, is caused by both $cos\{k_i \times (Z+2L)\}$, which occurs at the same time as $cos\{k_i \times (Z-2L)\}$ when expanding the term $cos(2L \times k_i) \times cos(k_i \times Z)$ in the third equation of Equation (8), and $sin\{k_i \times (Z+2L)\}$, which occurs likewise at the same time as $sin\{k_i \times (Z-2L)\}$ when expanding the term $cos(2L \times k_i) \times sin(k_i \times Z)$ in the third equation of Equation (9).

[Principles of the present invention]

(1) Construction of tomographic image

Hence, it can be seen that a folded image may be removed by preventing the occurrence of $cos\{k_i(Z+2L)\}$ and $sin\{k_i(Z+2L)\}$.

For example, the following Equation (10) and Equation (11), which express functions corresponding to the first term of the fourth equation in Equation (8) and Equation (9), may be synthesized from a measurement value.

$$Y'_C(z) = 2\sqrt{I_r I_s} \times \sum_{i=1}^{N} \cos\left\{k_i \times (Z - 2L)\right\} \quad \cdots\cdots (10)$$

$$Y'_s(z) = 2\sqrt{I_r I_s} \times \sum_{i=1}^{N} \sin\left\{k_i \times (Z - 2L)\right\} \quad \cdots\cdots (11)$$

First, the manner in which Equation (10) is to be synthesized must be considered. By solving $\cos\{k_i \times (Z-2L)\}$ on the right side of Equation (10), the following Equation (12) is obtained.

$$Y'_C(z) = 2\sqrt{I_r I_s} \times \sum_{i=1}^{N} \cos\left\{k_i \times (Z - 2L)\right\}$$

$$= 2\sqrt{I_r I_s} \times \sum_{i=1}^{N} \cos(k_i \times 2L) \times \cos(k_i \times z) + 2\sqrt{I_r I_s} \times \sum_{i=1}^{N} \sin(k_i \times 2L) \times \sin(k_i \times z)$$

$$\cdots\cdots (12)$$

Of the components constituting the third equation of Equation (12), $\cos(k_i \times Z)$ and $\sin(k_i \times Z)$ are quantities obtained directly from the wave number $k_i$, whereas $2(I_r I_s)^{1/2} \times \cos(k_i \times 2L)$ and $2(I_r I_s)^{1/2} \times \sin(k_i \times 2L)$, which are terms including information ($I_s$ and L) relating to the measurement subject, must be obtained through measurement. Of these terms, $2(I_r I_s)^{1/2} \times \cos(k_i \times 2L)$ is the interference component measured in the OFDR-OCT already proposed by the present inventors. Hence, if $2(I_r I_s)^{1/2} \times \sin(k_i \times 2L)$ can be obtained, Equation (10) can be synthesized.
Similarly, Equation (11) can be expressed as the following Equation (13), and therefore, if $\sin(k_i \times 2L)$ can be obtained, Equation (11) can also be synthesized.

$$Y'_S(z) = 2\sqrt{I_r I_s} \times \sum_{i=1}^{N} \sin\left\{k_i \times (Z - 2L)\right\}$$

$$= 2\sqrt{I_r I_s} \times \sum_{i=1}^{N} \cos(k_i \times 2L) \times \sin(k_i \times z) - 2\sqrt{I_r I_s} \times \sum_{i=1}^{N} \sin(k_i \times 2L) \times \cos(k_i \times z)$$

$$\cdots\cdots (13)$$

If $Y_{c'}(z)$ and $Y_{s'}(z)$ can be obtained in this manner, a tomographic image exhibiting no folding can be constructed by calculating $Y_t^2(z) = Y_{c'}^2(z) + Y_{s'}^2(z)$ in the following manner.
First, to calculate $Y_{c'}(z)$ and $Y_{s'}(z)$, the following Equations (14) and (15) are used.

$$Y'_C(z) = 2\sqrt{I_r I_s} \times \sum_{i=1}^{N} cos\{k_i \times (Z-2L)\} = 2\sqrt{I_r I_s} \times cos\left[(Z-2L) \times \left\{k_0 + \frac{\Delta k(N+1)}{2}\right\}\right]$$

$$\times \frac{sin\left\{\frac{(Z-2L)}{2} \times N \times \Delta k\right\}}{sin\left\{\frac{Z-2L}{2} \times \Delta k\right\}} \qquad \cdots\cdots \quad (14)$$

$$Y'_S(z) = 2\sqrt{I_r I_s} \times \sum_{i=1}^{N} cos\{k_i \times (Z-2L)\} = 2\sqrt{I_r I_s} \times sin\left[(Z-2L) \times \left\{k_0 + \frac{\Delta k(N+1)}{2}\right\}\right]$$

$$\times \frac{sin\left\{\frac{(Z-2L)}{2} \times N \times \Delta k\right\}}{sin\left\{\frac{Z-2L}{2} \times \Delta k\right\}} \qquad \cdots\cdots \quad (15)$$

The specific derivation process of Equation (14) is as follows.

When calculating Equation (14), it is convenient to use the following Equation (16) and Equation (17). Here, j is an imaginary unit.

$$cos\,\alpha = \frac{e^{j\alpha} + e^{-j\alpha}}{2} \qquad \cdots\cdots \quad (16)$$

$$\sum_{i=1}^{N} e^{ji\gamma} = \frac{e^{j\gamma} - e^{j(N+1)}}{1 - e^{j\gamma}} = e^{j\left(\frac{N}{2}+1\right)\gamma} \frac{\frac{e^{j\frac{N}{2}\gamma} - e^{-j\frac{N}{2}\gamma}}{2}}{e^{j\frac{\gamma}{2}} \frac{e^{j\frac{\gamma}{2}} - e^{-j\frac{\gamma}{2}}}{2}} = e^{j\frac{N+1}{2}\gamma} \frac{sin\left(\frac{N}{2}\gamma\right)}{sin\left(\frac{1}{2}\gamma\right)}$$

$$\cdots\cdots \quad (17)$$

Note that Equation (17) is identical to Equation (9') described above.

First, $\alpha = k_i \times (Z-2L)$ is inserted into the second equation of Equation (14), whereupon cos $\alpha$ is expanded by $e^{j\alpha}$, $e^{-j\alpha}$ on the basis of Equation (16). Equation (17) is used to calculate $\Sigma e^{ji\gamma}$, $\Sigma e^{-ji\gamma}$. At this time, $\gamma = \Delta k \times (Z-2L)$ is inserted, and the following relational expression (a) is used.

$$j\,\alpha = j \times k_i \times (Z-2L) = j \times (k_0 + \Delta k \times i) \times (Z-2L)$$

$$= j \times k_0 \times (Z-2L) + j \times (\Delta k \times i) \times (Z-2L) = j \times k_0 \times (Z-2L) + j \times i \times \gamma$$

$$\cdots\cdots \quad (a)$$

After calculating $\Sigma e^{j i \gamma}$, $\Sigma e^{-j i \gamma}$, Equation (16) is used again to obtain Equation (14) finally. Equation (15) maybe calculated in a similar manner.

When $Y_t^2(z) = Y_c^2(z) + Y_s^2(z)$ is calculated on the basis of Equation (14) and Equation (15), the following Equation (18) can be obtained.

$$Y_t'^2(z) = Y_c'^2(z) + Y_s'^2(z)$$

$$= 4 I_r I_s \times \left[ \cos^2\left\{ (z-2L)\left( k_0 + \frac{\triangle k(N+1)}{2} \right) \right\} + \sin^2\left\{ (z-2L)\left( k_0 + \frac{\triangle k(N+1)}{2} \right) \right\} \right]$$

$$\times \left[ \frac{\sin\left\{ \frac{Z-2L}{2} \times N \times \triangle k \right\}}{\sin\left\{ \frac{Z-2L}{2} \times \triangle k \right\}} \right]^2 = 4 I_r I_s \times \left[ \frac{\sin\left\{ \frac{Z-2L}{2} \times N \times \triangle k \right\}}{\sin\left\{ \frac{Z-2L}{2} \times \triangle k \right\}} \right]^2$$

$$\cdots\cdots (18)$$

As is evident from this equation, the second term of Equation (6) causing a folded image no longer exists, and only the first term, which expresses a normal image, is present. Hence, if $Y_c'(z)$ and $Y_s'(z)$ can be calculated on the basis of the third equation of Equation (12) and Equation (13), a tomographic image exhibiting no folding can be obtained. Furthermore, the noise floor $B(z)$ generated in OFDR-OCT does not occur.

(2) Method of obtaining required data

The values that must be measured to perform the calculations in Equation (12) and Equation (13) are $2(I_r I_s)^{1/2} \times \cos(k_i \times 2L)$ and $2(I_r I_s)^{1/2} \times \sin(k_i \times 2L)$. As noted above, $2(I_r I_s)^{1/2} \times \cos(k_i x 2L)$ is measured during the OFDR-OCT already proposed by the present inventors, and therefore, if $2(I_r I_s)^{1/2} \times \sin(k_i \times 2L)$ can be obtained, a tomographic image exhibiting no folding can be constructed.

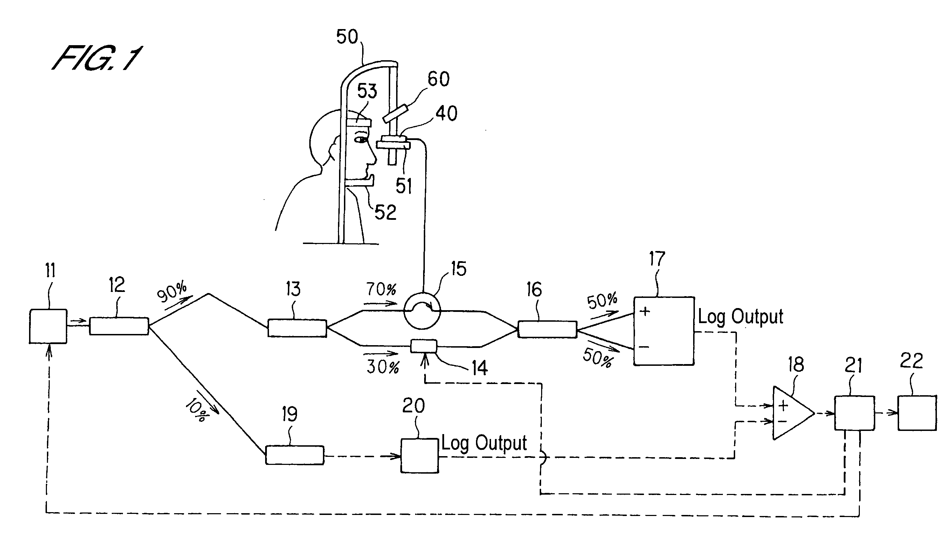

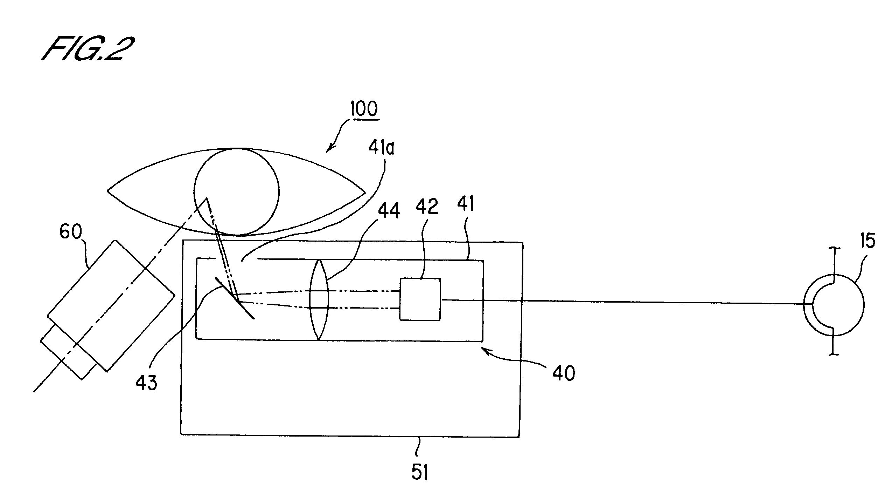

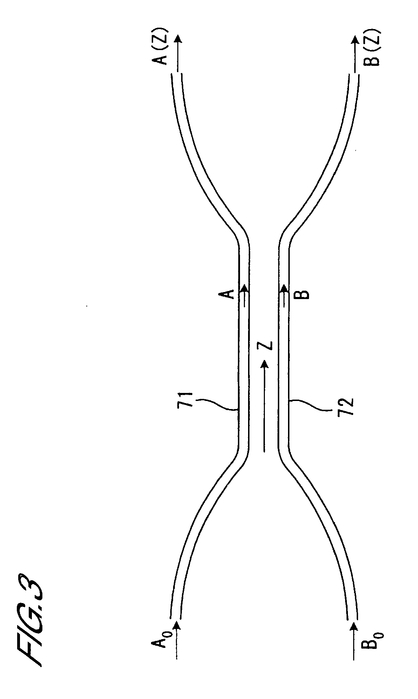

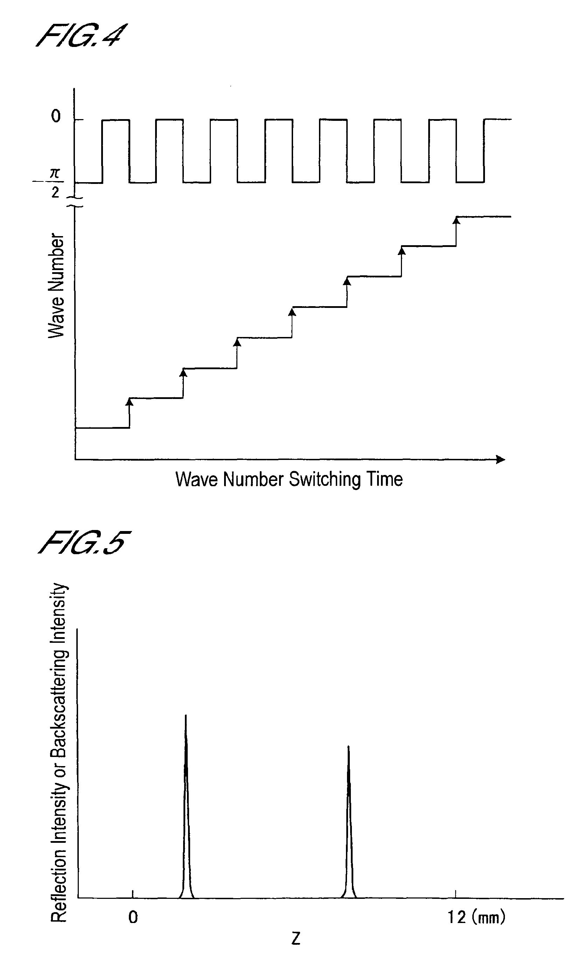

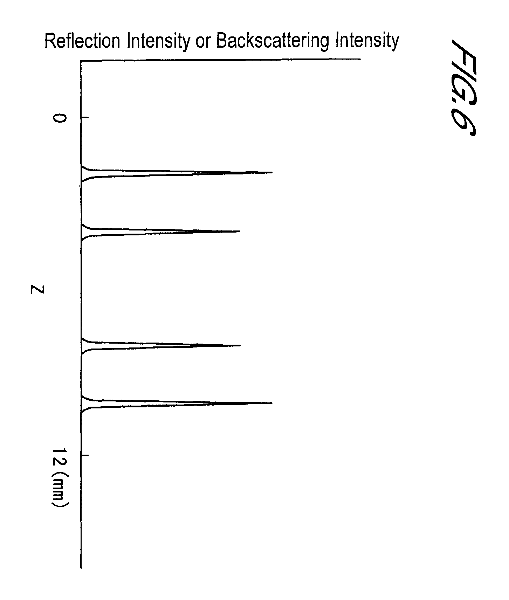

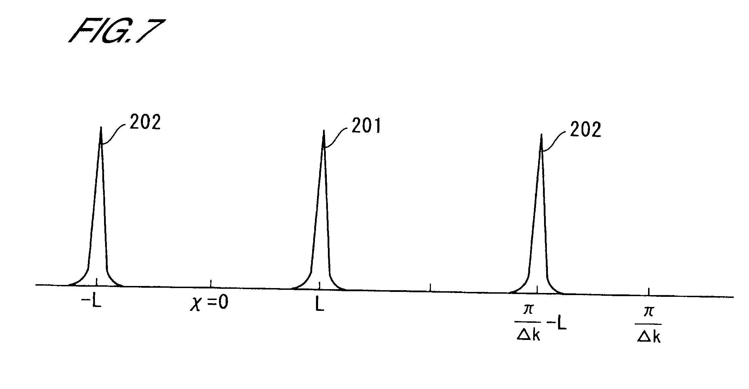

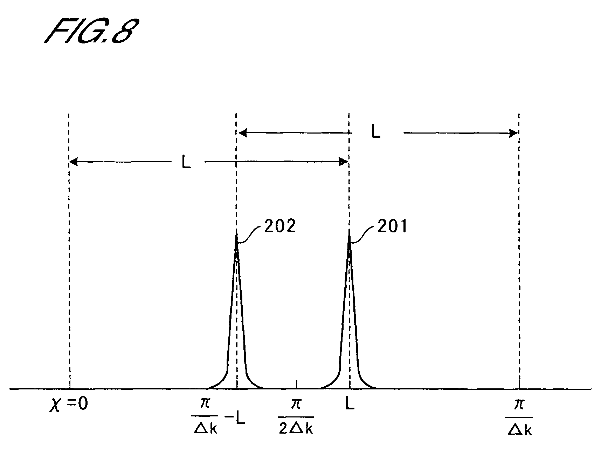

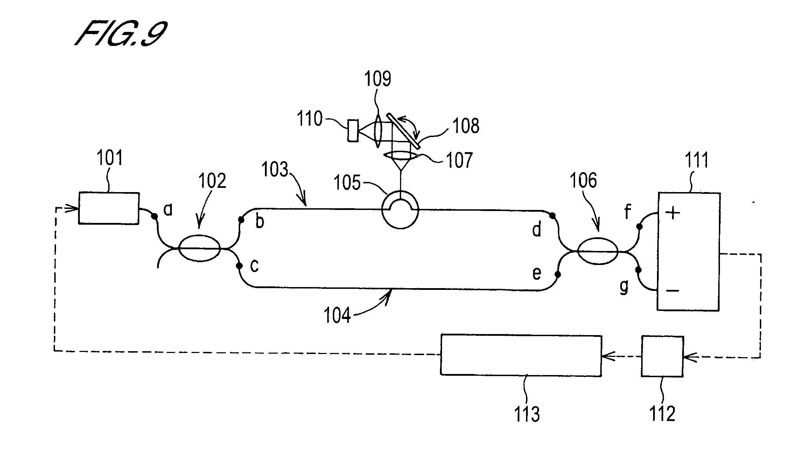

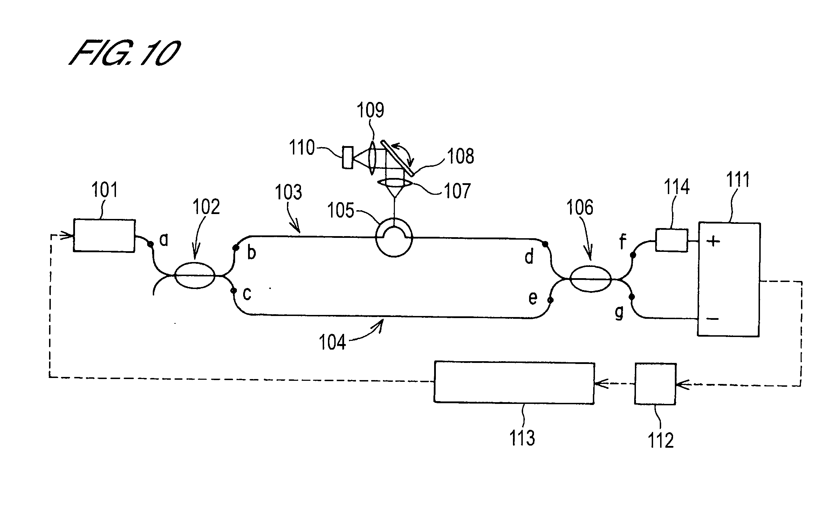

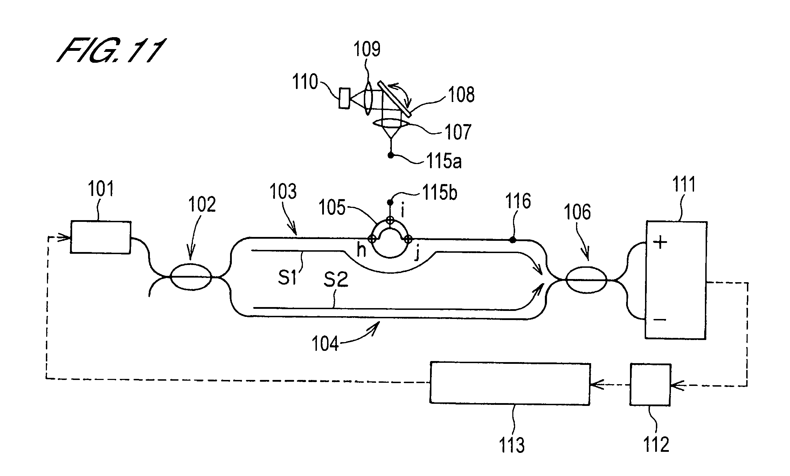

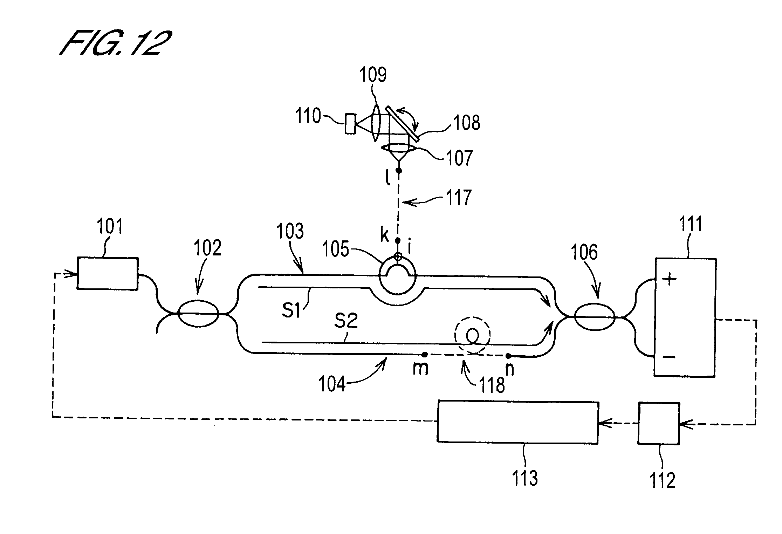

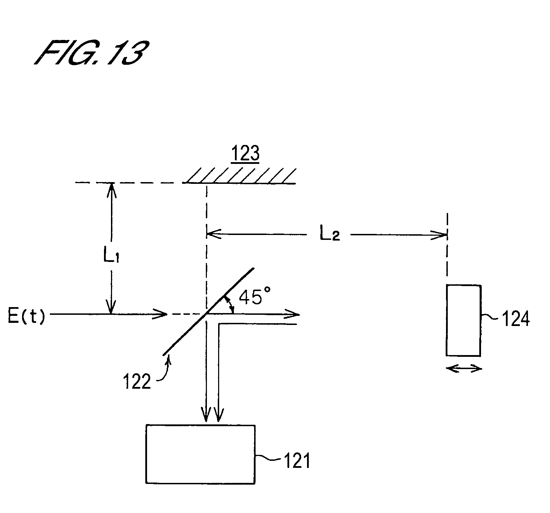

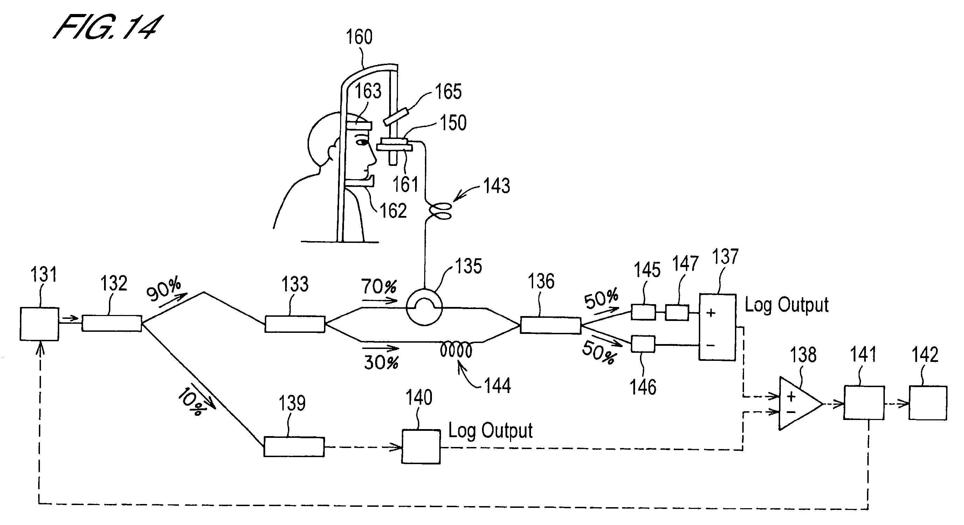

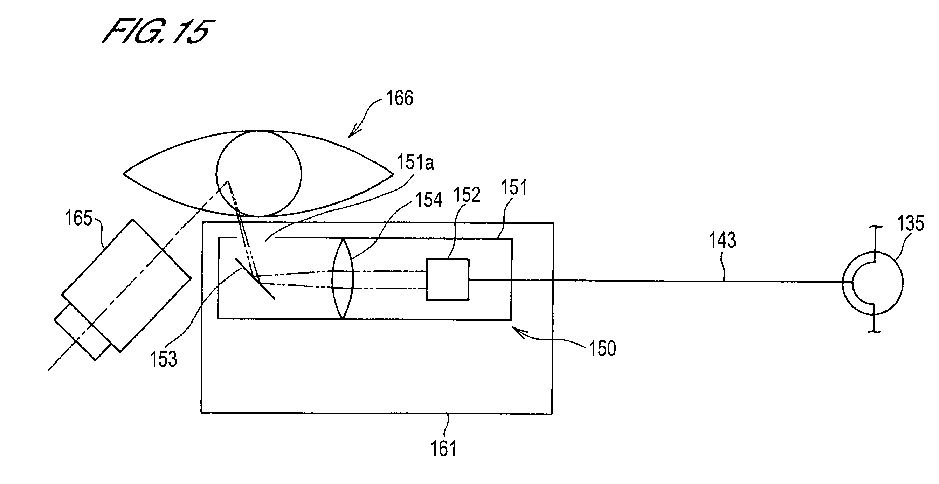

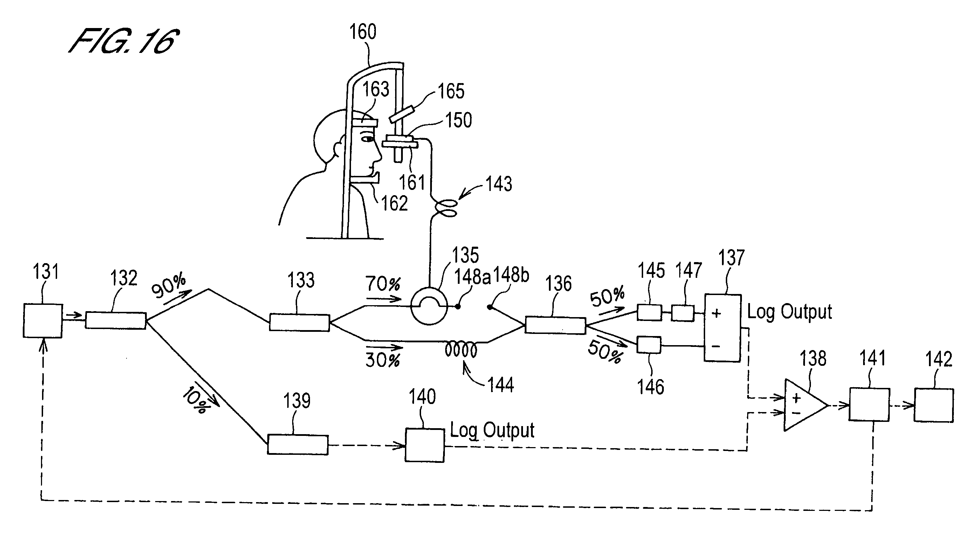

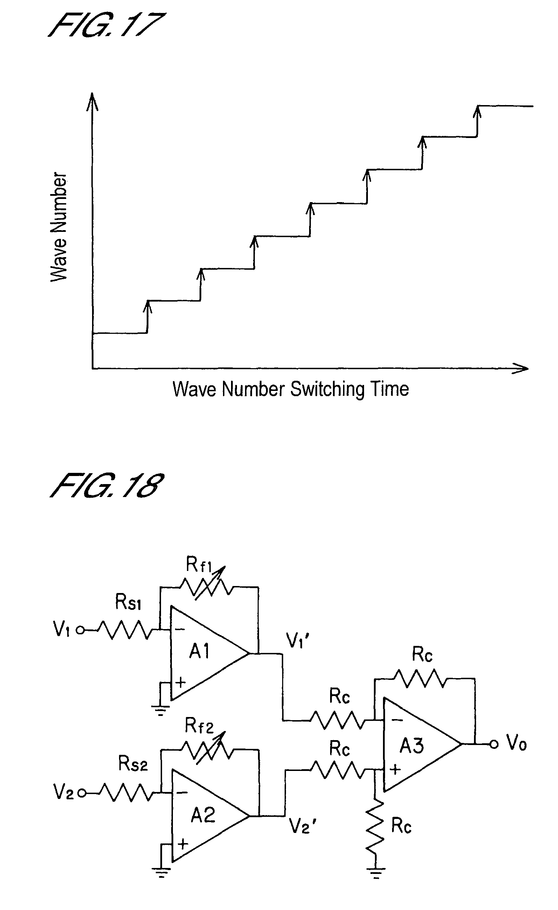

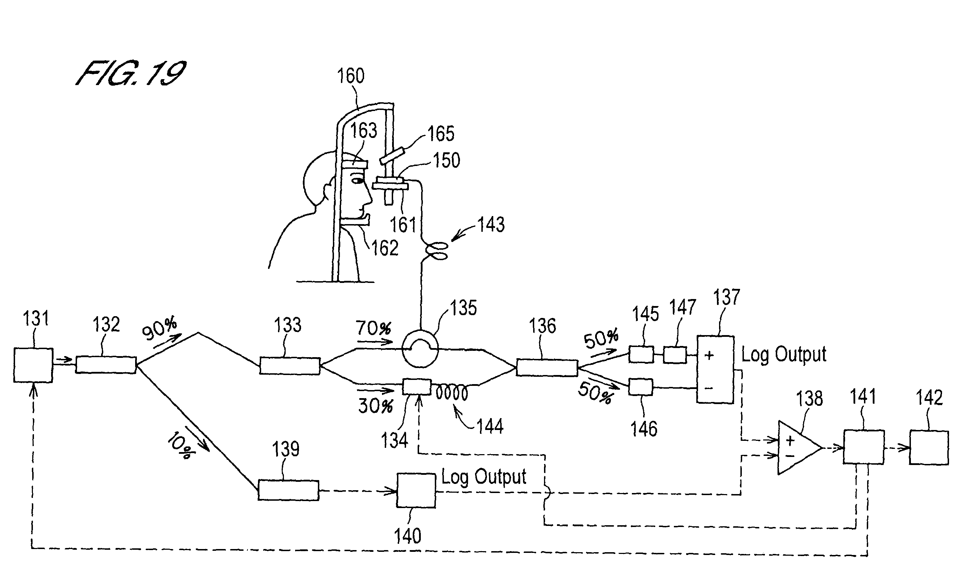

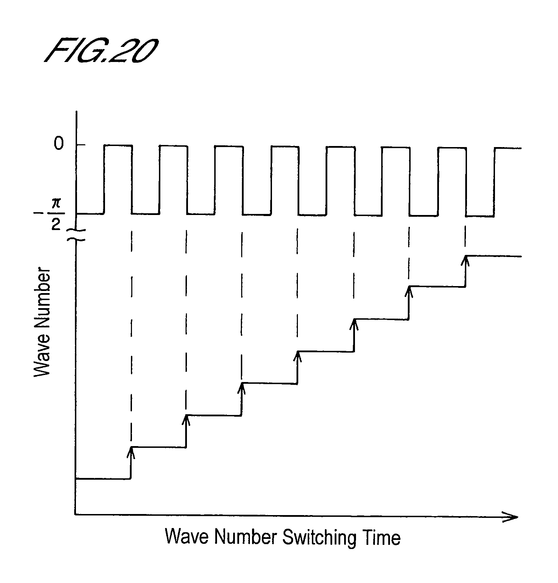

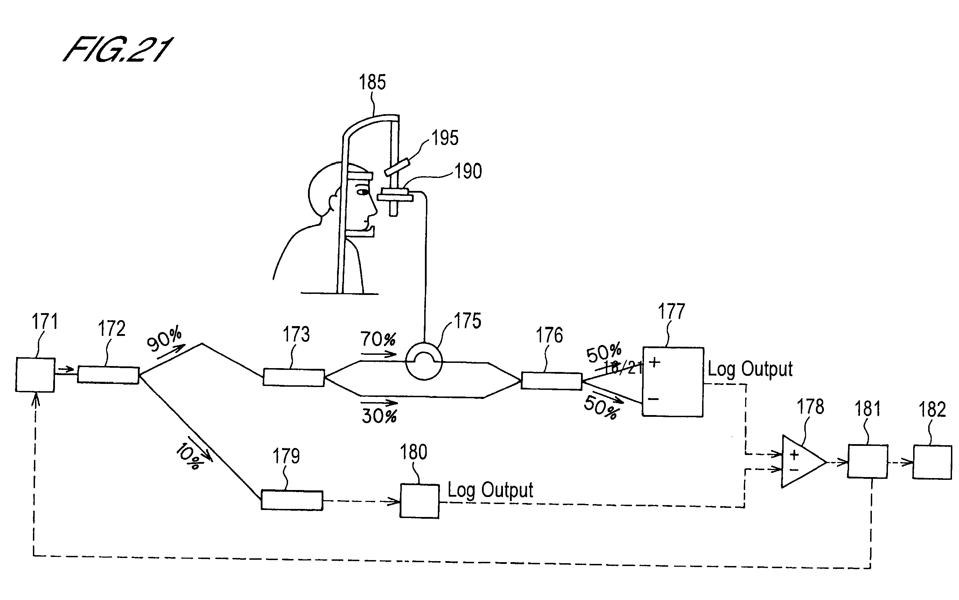

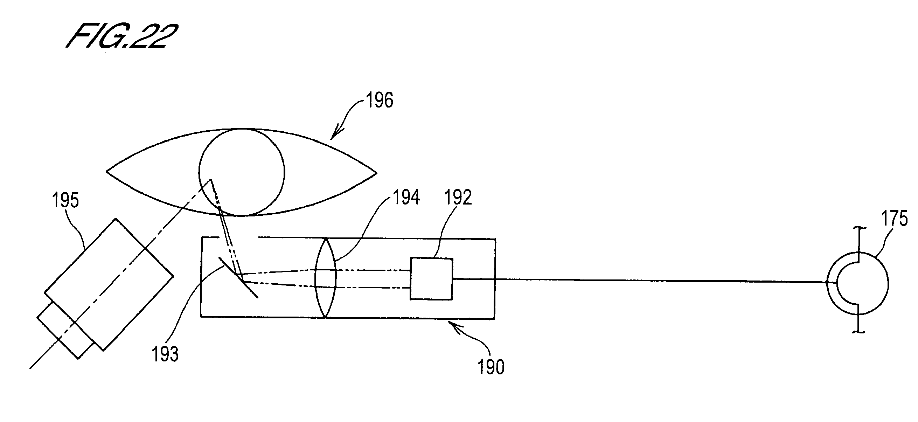

Fig. 1 shows a system constitution for measuring $2(I_r I_s)^{1/2} \times \sin(k_i \times 2L)$. The main difference with the OFDR-OCT system shown in Fig. 21 is the provision of an optical phase modulator 14, which serves as phase shifting means for shifting the phase of the interference light, on the optical path of the reference light. With this system constitution, a phase modulation $\phi$ is applied to the reference light, and therefore the output of the differential amplifier 17 can be set as shown in the following Equation (19) (the reason for expressing the output of the differential amplifier 17 as shown in Equation (19) will be described below).

$$I_d(k_i) = 2\sqrt{I_r I_s}\,\cos(2L \times k_i + \phi)\qquad\cdots\cdots (19)$$

As is evident from Equation (19), by controlling the phase modulation $\phi$, the value $2(I_r I_s)^{1/2} \times \cos(k_i \times 2L)$ used in conventional OFDR-OCT is obtained when $\phi = 0$ (rad, radians), and $2(I_r I_s)^{1/2} \times \sin(k_i \times 2L)$, which must be newly obtained, can be obtained when $\phi = -\pi/2$ (rad). Hence, when a system such as that shown in Fig. 1 is used, a tomographic image exhibiting no folding can be constructed.

(3) Derivation of Equation (19)

To apply phase variation to an interference signal, an optical phase modulator may be provided on one of the optical paths of light divided into two by an interferometer. The process of applying a phase difference to the interference signal and the value thereof differ according to the structure of the interferometer, the optical path into which the optical phase modulator is inserted, and so on. Here, a Mach-Zender interferometer using a directional coupler as a multiplexer and a demultiplexer will be described.

Fig. 3 is an illustrative view of the actions of the directional coupler. Expressions $A(z)$ and $B(z)$ expressing the z direction dependence of an amplitude intensity relating to beams A, B propagating through a first optical waveguide 71 and a second optical waveguide 72 may be expressed by the following Equations (20) and (21). Note that a time dependent term $e^{j\omega t}$ has been omitted.

$$A(z) = \left[\left(\cos \gamma z + j\frac{\Delta}{\gamma} \sin \gamma z\right) A_0 - j\frac{\kappa}{\gamma} \sin \gamma z \cdot B_0\right] \times e^{-j\Delta z} \qquad \cdots\cdots (20)$$

$$B(z) = \left[-j\frac{\kappa}{\gamma} \sin \gamma z \cdot A_0 + \left(\cos \gamma z - j\frac{\Delta}{\gamma} \sin \gamma z\right) B_0\right] \times e^{j\Delta z} \qquad \cdots\cdots (21)$$

Here, $A_0$ and $B_0$ are the initial values of $A(z)$ and $B(z)$. Hence, when the respective propagation constants of the first and second optical waveguides 71, 72 are $\beta_1$, $\beta_2$ and a mode coupling constant is $\kappa$, the following Equations (22), (23) are established.

$$\Delta = \frac{1}{2}(\beta_2 - \beta_1) \qquad \cdots\cdots (22)$$

$$\gamma = \sqrt{\kappa^2 + \Delta^2} \qquad \cdots\cdots (23)$$

With a directional coupler, typically $\Delta=0$, and therefore $\gamma=\kappa$. Hence, the Equation (20) and the Equation (21) become the following Equations (24), (25).

$$A(z) = \cos \kappa z \cdot A_0 - j \sin \kappa z \cdot B_0 \qquad \cdots\cdots (24)$$

$$B(z) = -j \sin \kappa z \cdot A_0 + \cos \kappa z \cdot B_0 \qquad \cdots\cdots (25)$$

First, the phase difference between measurement light and reference light divided by a second coupler 13 constituted by a directional coupler in Fig. 1 will be investigated. Light from a wavelength tunable light source 11 is input into one of the input terminals of the second coupler 13, whereas nothing enters the other input terminal. Hence, assuming that the light from the wavelength tunable light source 11 is $B_0$, $A_0=0$, and therefore the Equation (24) and the Equation (25) become the following Equations (26), (27).

$$A(z) = -j \sin \kappa z \cdot B_0 = \sin \kappa z \cdot B_0\, e^{-j\frac{\pi}{2}} \qquad \cdots\cdots (26)$$

$$B(z) = \cos \kappa z \cdot B_0 \qquad \cdots\cdots (27)$$

As can be seen from Equation (26) and Equation (27), the phase of the beam $B(z)$ output from the second optical waveguide 72 is further advanced than the phase of the beam $A(z)$ output from the first optical waveguide 71 by $\pi/2$. Hence, initial values $A_{0'}$, $B_{0'}$ of the light that is input into the second coupler 13 constituted by a directional coupler in Fig. 1 take values obtained by the following Equations (28), (29).

$$A'_0 = \sqrt{I_s}\ e^{-jkiL_s} \qquad \cdots\cdots \ (28)$$

$$B'_0 = \sqrt{I_r}\ e^{-jkiL_r + j\frac{\pi}{2} + j\ \phi} \qquad \cdots\cdots \ (29)$$

Next, the input/output characteristic of the third coupler 13 is obtained. The third coupler 13 is a 3dB coupler constituted by a directional coupler. In a directional coupler, a 3dB coupler is realized by setting the output terminal such that Z = π/4κ. Hence, the outputs of the first and second optical waveguides 71, 72 are A(π/4κ), B(π/4κ), and therefore the input/output characteristic of the third coupler 13 takes a value obtained by the following Equations (30), (31).

$$A\left(\frac{\pi}{4\kappa}\right) = \frac{A'_0 - jB'_0}{\sqrt{2}} \qquad \cdots\cdots \ (30)$$

$$B\left(\frac{\pi}{4\kappa}\right) = \frac{-jA'_0 + B'_0}{\sqrt{2}} \qquad \cdots\cdots \ (31)$$

To derive these equations, z = π/4κ may be set in Equation (20) and Equation (21). Hence, in Fig. 1, an optical intensity (I+, I-) detected by the input of the first differential amplifier 17 takes a value obtained by the following Equations (32), (33) (a constant of proportionality has been omitted; likewise hereafter).

$$I_+ = \left[ A\left(\frac{\pi}{4\kappa}\right) \cdot e^{j\omega t} \right] \times \left[ A\left(\frac{\pi}{4\kappa}\right) \cdot e^{j\omega t} \right]^* = \frac{A'_0 \cdot A'^*_0 + B'_0 \cdot B'^*_0}{2} + j\frac{A'_0 \cdot B'^*_0 - A'^*_0 \cdot B'_0}{2}$$

$$\cdots\cdots \ (32)$$

$$I_- = \left[ B\left(\frac{\pi}{4\kappa}\right) \cdot e^{j\omega t} \right] \times \left[ B\left(\frac{\pi}{4\kappa}\right) \cdot e^{j\omega t} \right]^* = \frac{A'_0 \cdot A'^*_0 + B'_0 \cdot B'^*_0}{2} - j\frac{A'_0 \cdot B'^*_0 - A'^*_0 \cdot B'_0}{2}$$

$$\cdots\cdots \ (33)$$

Note that * expresses a complex conjugate.
Hence, the output of the first differential amplifier 17 takes a value obtained by the following Equation (34).

$$I_+ - I_- = j\left( A'_0 \cdot B'^*_0 - A'^*_0 \cdot B'_0 \right) \qquad \cdots\cdots (34)$$

Note that in the system shown in Fig. 1, the output of the first differential amplifier 17 is a logarithmic amplifier, and this is due to the fact that output variation in the wavelength tunable light source 11 is corrected by the second differential amplifier 18 (this will be described in detail below).
Finally, by inserting Equation (28) and Equation (29) into Equation (34), the following Equation (35) is obtained.

$$I_+ - I_- = j\left(A'_0 \cdot B'^*_0 - A'^*_0 \cdot B'_0\right) = -2\sqrt{I_r I_s}\, sin\left\{k_i\,(L_r - L_s) - \frac{\pi}{2} - \phi\right\}$$

$$= 2\sqrt{I_r I_s}\, cos\left\{k_i\,(L_r - L_s) + \phi\right\}$$

$$\cdots\cdots (35)$$

Here, $L_s - L_r = 2L$, and therefore the output $I(k_i, \phi)$ of the first differential amplifier 17 at the wave number $k_i$ takes a value obtained by the following Equation (36).

$$I(k_i, \phi) = 2\sqrt{I_r I_s}\, cos(2L \times k_i + \phi)$$

$$\cdots\cdots (36)$$

Equation (36) matches Equation (19).

FIRST EMBODIMENT

(System constitution)

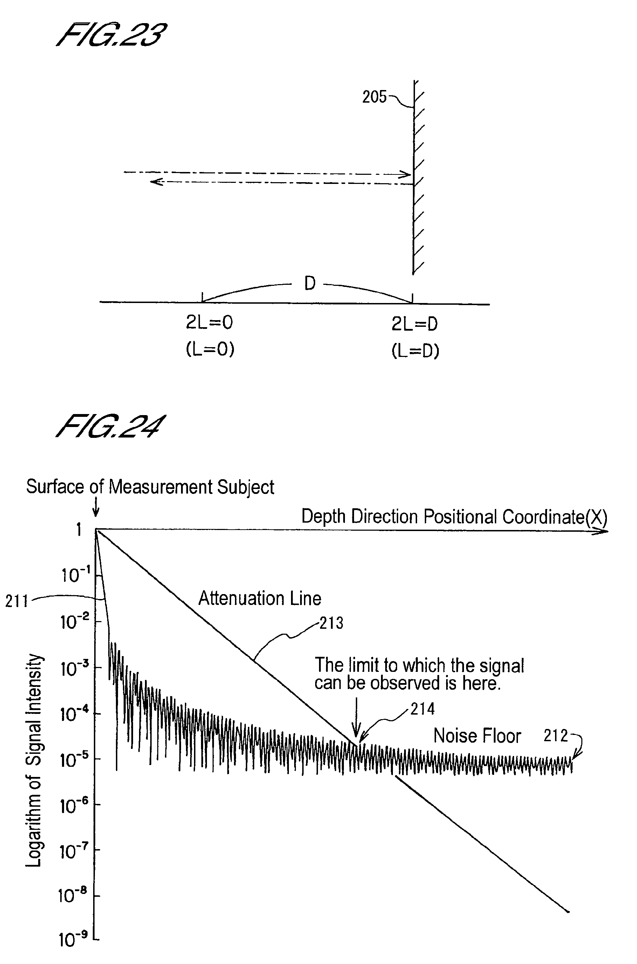

Figs. 1 and 2 are schematic diagrams of embodiments when the optical coherence tomography system according to the present invention is applied to a tomographic image capturing system. The measurement subject is the anterior eye portion of a human being, similarly to the OFDR-OCT system described in the background art.

As shown in Fig. 1, for example, a light emission port of the wavelength tunable light source 11 serving as wavelength tunable light generating means capable of illuminating light while varying the wavelength thereof, such as super-structure grating distributed Bragg reflector laser light source (see Non-patent Document 3 and so on, for example), is optically connected to a light reception port of the first coupler 12 constituted by a directional coupler or the like for dividing light into two (at 90:10, for example). A light transmission port on one side (the 90% divided proportion side) of the first coupler 12 is optically connected to a light reception port of the second coupler 13 serving as dividing means constituted by a directional coupler or the like for dividing light into two (at 70:30, for example).

A light transmission port on one side (the 70% divided proportion side) of the second coupler 13 is optically connected to a light reception port of an optical circulator 15. A light transmission port on the other side (the 30% divided proportion side) of the second coupler 13 is optically connected to a light reception port of the optical phase modulator 14 serving as phase shifting means. A light transmission port of the optical phase modulator 14 is optically connected to one light reception port of the third coupler 16 serving as combining means constituted by a directional coupler or the like for dividing light into two (at 50:50, for example). Note that a system constituted by an LN phase modulator and a control system thereof may be applied as the optical phase modulator 14, for example.

The optical circulator 15 is optically connected to another light reception port of the third coupler 16 and is also connected to a measurement head 40. The measurement head 40 is attached to a movable stage 51 provided on a support 50, and is structured as shown in Fig. 2.

As shown in Fig. 2, the measuring head 40 comprises a main body tube 41 supported on the movable stage 51 of the support arm 50 and formed with a light entrance/exit window 41a in a part of a tip end side peripheral wall thereof, a collimator lens 42 disposed on a base end side of the interior of the main body tube 41 and optically connected to the optical circulator 15, a galvanometer mirror 43 disposed on a tip end side of the interior of the main body tube 41 and capable of a scanning motion enabling modification of the orientation direction thereof, and a focusing lens 44 disposed between the collimator lens 42 and galvanometer mirror 43 in the interior of the main body tube 41. Further, the support 50 is provided with support arms 52, 53 for fixedly supporting the face of a test subject in a sitting position such that an eye 100 of the test subject remains oriented in a horizontal direction, and attached with a slit-lamp microscope 60. The measurement head 40 is mounted in an empty space formed by removing a slit light (narrow gap light) irradiation system from the slit-lamp microscope 60. Using the positioning function of the slit-lamp microscope 60, measurement light can be guided to the vicinity of a desired position on the eye 100 of the test subject.

In other words, measurement light that enters the collimator lens 42 in the interior of the main body tube 41 of the measurement head 40 from the optical circulator 15 is formed into parallel beams that converge on the focusing lens 44, whereupon the measurement light exits through the light entrance/exit window 41a of the main body tube 41 via the galvanometer mirror 43 and impinges on the eye 100. The resultant reflected (or backscattered) signal light enters the interior of the main body tube 41 through the light entrance/exit window 41a, is reflected by the galvanometer mirror 43, and enters the optical circulator 15 from the base end side of the main body tube 41 via the focusing lens 44 and collimator lens 42.

In this embodiment, the optical circulator 15, measurement head 40, and so on constitute illuminating/collecting means doubling as measurement light illuminating means and signal light collecting means capable of illuminating the eye 100 serving as the measurement subject with the measurement light and collecting the signal light that is reflected or backscattered by the eye 100.

As shown in Fig. 1, light transmission ports on one side and another side of the third coupler 16 are optically connected to light reception ports of the first differential amplifier 17 having a light detection function. A logarithmic output portion of the first differential amplifier 17 is electrically connected to one input portion of the second differential amplifier 18 for correctively calculating variation in the intensity of an input signal. Meanwhile, a light transmission port on the other side (the 10% divided proportion side) of the first coupler 12 is optically connected to a light reception port of a photodetector 19. An output portion of the photodetector 19 is electrically connected to an input portion of a logarithmic amplifier 20. A logarithmic output portion of the logarithmic amplifier 20 is electrically connected to another input portion of the second differential amplifier 18.

An output portion of the second differential amplifier 18 is electrically connected to an input portion of a calculation control device 21 for synthesizing a coherence interference waveform, or in other words a backscattering intensity distribution, via an analog/digital converter, not shown in the drawing. An output portion of the calculation control device 21 is electrically connected to the wavelength tunable light source 11, the optical phase modulator 14, and an input portion of a display device 22 such as a monitor or printer for displaying a calculation result. The output portion of the calculation control device 21 is also electrically connected to the measurement head 40 (not shown). The calculation control device 21 is constituted to be capable of controlling the wavelength tunable light source 11, the optical phase modulator 14, the galvanometer mirror 43 of the measurement head 40, and so on, on the basis of input information.

Note that in this embodiment, the first differential amplifier 17, second differential amplifier 18, photodetector 19, logarithmic amplifier 20, calculation control device 21, display device 22, and so on constitute measuring means and identifying means.

The output of the first differential amplifier 17 takes the logarithmic of equation (36) derived in the "Principles of the present invention" described above. Meanwhile, the output of the logarithmic amplifier 20 takes a value commensurate with $\log I_r$, and therefore the output of the second differential amplifier 18 takes a value obtained by the following Equation (37) (a constant term has been omitted).

$$\log\left[\sqrt{\frac{I_s}{I_r}}\,\cos(2L \times k_i + \phi)\right] \qquad \cdots\cdots (37)$$

Note that in Equation (37), the single reflection surface 205 exists in the log, as described in the "Principles of the present invention", and for ease of description, a case in which the single reflection surface 205 is provided will also be considered hereafter.

(Operation method)

First, as shown on the lower side of Fig. 4, the calculation control device 21 emits light from the wavelength tunable light source 11 while varying the wave number in a stepped fashion relative to time. The calculation control device 21 also controls the optical phase modulator 14 at the same time as it controls the wave number scan of the wavelength tunable light source 11. As shown on the upper side of Fig. 4, the optical phase modulator 14 modulates the phase of the reference light alternately between 0 (rad) and $-\pi/2$ (rad, radians) on the basis of a signal from the calculation control device 21 and in synchronization with the wave number switching of the wavelength tunable light source 11. In other words, the reference light is phase-modulated by 0 (rad, radians) in the first half period of the wave number holding period, and by $-\pi/2$ (rad, radians) in the latter half period.

The second differential amplifier 18 outputs a signal commensurate with the following Equation (38') in the first half of the holding period of each wave number $k_i$, and outputs a signal commensurate with the following Equation (39') in the latter half.

$$log\left\{I\left(k_i,0\right)\right\} = log\left[\sqrt{\frac{I_s}{I_r}}\ cos(2L \times k_i)\right] \qquad \cdots\cdots (38')$$

$$log\left\{I\left(k_i,-\frac{\pi}{2}\right)\right\} = log\left[\sqrt{\frac{I_s}{I_r}}\ cos(2L \times k_i - \frac{\pi}{2})\right] = log\left[\sqrt{\frac{I_s}{I_r}}\ sin(2L \times k_i)\right] \qquad \cdots\cdots (39')$$

When log is removed from the Equations (38'), (39'), the following Equations (38), (39) are obtained.

$$I\left(k_i,0\right) = \sqrt{\frac{I_s}{I_r}}\ cos(2L \times k_i) \qquad \cdots\cdots (38)$$

$$I\left(k_i,-\frac{\pi}{2}\right) = \sqrt{\frac{I_s}{I_r}}\ sin(2L \times k_i) \qquad \cdots\cdots (39)$$

In other words, $I_i(k_i, 0)$ becomes a cosine function against the wave number, and $I_i(k_i, -\pi/2)$ becomes a sine function against the wave number. Note that an intensity at which the output light becomes a cosine function against the wave number when the single reflection surface 205 is provided, as indicated by $I_i(k_i, 0)$, will be referred to as a "first intensity", and an intensity at which the output light becomes a sine function (or a reverse-sign function thereof) when the single reflection surface 205 is provided, as indicated by $I_i(k_i, -\pi/2)$, will be referred to as a "second intensity".

The output light intensity is then converted into a digital signal by the analog/digital converter, and transmitted to the calculation control device 21. The calculation control device 21 stores the value thereof in association with $k_i$ and $\phi = 0, -\pi/2$. Next, the calculation control device 21 controls the galvanometer mirror 43 to move the wavelength tunable light irradiation position on the surface of the measurement subject eye 100 slightly along a straight line in the horizontal direction. A similar measurement operation to that described above is then performed in the new irradiation position.

By performing the operation described above repeatedly, data required to construct a tomographic image are gathered (the number of scanning points in the horizontal direction is set at 100, for example). When measurement is complete, the calculation control device 21 calculates a distribution $Y_t{}''^2(z)$ of the reflection intensity or backscattering intensity in the depth direction for each measurement point on the basis of the gathered data and in accordance with the following Equations (40) to (42), and constructs a tomographic image on the basis of this distribution.

$$Y_c''(z) = \sum_{i=1}^{N} I_i(k_i,0) \times cos(k_i \times z) + \sum_{i=1}^{N} I_i\left(k_i,-\frac{\pi}{2}\right) \times sin(k_i \times z) \qquad \cdots\cdots (40)$$

$$Y_s''(z) = \sum_{i=1}^{N} I_i(k_i,0) \times sin(k_i \times z) - \sum_{i=1}^{N} I_i\left(k_i,-\frac{\pi}{2}\right) \times cos(k_i \times z) \qquad \cdots\cdots (41)$$

$$Y_t''^2(z) = Y_c''^2(z) + Y_s''^2(z) \qquad \cdots\cdots (42)$$

Equations (40) to (42) can be derived easily by comparing Equations (12), (13), (18), (38), and (39). Note that the first term on the right side of Equation (40) is obtained by subjecting the output light intensity serving as a cosine function against the wave number (the first intensity) to Fourier cosine transform, and the second term is obtained by subjecting the output light intensity serving as a sine function against the wave number (the second intensity) to Fourier sine transform. Further, the first term on the right side of Equation (41) is obtained by subjecting the output light intensity serving as a cosine function against the wave number (the first intensity) to Fourier sine transform, and the second item is obtained by subjecting the output light intensity serving as a sine function against the wave number (the second intensity) to Fourier cosine transform.

It is evident from Equations (12) to (18) that when a single reflection surface or scatterer is provided, $Y_t''^2(z)$ expresses the distribution of the reflection or backscattering intensity, or in other words that the following equation (b) is obtained.

$$Y_t''^2(z) = 4 \frac{I_s}{I_r} \times \left[ \frac{\sin\left\{ \frac{Z-2L}{2} \times N \times \Delta k \right\}}{\sin\left\{ \frac{Z-2L}{2} \times \Delta k \right\}} \right]^2 \quad \cdots\cdots \ (b)$$

Hence, by means of the operation described above, a tomographic image exhibiting no folding is obtained.

Note that when a plurality of reflection surfaces (or scatterers) is provided, the sum of the following term (c), which corresponds to the signals from the plurality of reflection surfaces (or scatterers), and a term that is small enough to be ignored is obtained. Here, $2L_i$ is an optical path length difference relative to the $i^{th}$ reflection surface, and N is the number of reflection surfaces. This is derived from a simple calculation. Hence, even when a plurality of reflection surfaces (or scatterers) is provided, a tomographic image exhibiting no folding can be obtained.

$$\sum_{i=1}^{N} \frac{I_s}{I_r} \times \left[ \frac{\sin\left\{ \frac{Z-2L}{2} \times N \times \Delta k \right\}}{\sin\left\{ \frac{Z-2L}{2} \times \Delta k \right\}} \right]^2 \quad \cdots\cdots \ (c)$$

In the example described above, $Y_{t''}^2(z)$ is obtained to construct an tomographic image, but a tomographic image may be constructed by determining only $Y_{c''}(z)$ and then determining the high frequency component thereof. As is evident from Equation (14), $Y_{c''}(z)$ has a high frequency component $k_0 + (\Delta k(N+1))/2$. To remove the high frequency component, $Y_{c''}(z)$ or the absolute value of $Y_{s''}(z)$ may be averaged within a fixed range centering on a position z in which the high frequency component is to be removed. The range of the averaged z may be an approximate multiple of the following value (d). Note that the high frequency component may also be obtained by determining $^mY_{c''}(z)$, shown at the end of this section, or $^mY_{s''}(z)$ (Equation (45) or Equation (46)).

$$\frac{2\pi}{k_0 + \frac{\Delta k(N+1)}{2}} \quad \cdots\cdots \ (d)$$

Fig. 5 shows the result of calculating the reflection intensity or backscattering intensity distribution $Y_{t''}^2(z)$ when a 6mm thick glass is measured, wherein the wavelength tunable range is set at 1533.17 to 1574.14nm (wave number width $1.07 \times 10^{-1} \mu m$), the number of wave number scans is set at 400, and the wave number holding period per step is set at $1\mu s$. The wave number spacing is $2.67 \times 10^{-4} \mu m$, and the measurement range obtained by the wave number spacing $\Delta k$ is 12mm (= $\pi/\Delta k$).

The two observed reflection surfaces correspond to the front surface and rear surface of the glass. Only two reflection surfaces were observed, and a folded image was not generated. For comparison, measurement was also performed using the OFDR-OCT method, but in this case, as shown in Fig. 6, folding occurred such that four reflection surfaces were observed.

In the example described above, $Y_{t''}^2(z)$ is calculated to obtain a tomographic image as $\phi = -\pi/2$, but a tomographic image exhibiting no folding may be constructed as $\phi = \pi/2$. This may be achieved by reversing the "+" or "-" before the second term on the right side of Equation (40) and Equation (41). Further, $\phi_1 = 2n\pi \pm \pi/2$ (where n = $\pm 1$, $\pm 2$, ...) may also be used.

Note that two types of phase modulation, i.e. $\phi_1 = (2n+l) \times \pi$ and $\phi_2 = (2n+1) \times \pi \pm \pi/2$ (where n = 0, ±1, ±2, ...), may be implemented to obtain a reverse-sign output to that of the example described above. In this case, signal processing may be performed after inversing the output sign, and therefore there are substantially no differences between this case and a case in which the sign is not inversed. This case also serves as an embodiment of the present invention. In other words, the present invention includes a case in which all of the output signs are inversed, and a case in which positive and negative signs are inversed but the output light intensity is a cosine function or a sine function. Furthermore, performing Fourier cosine transform and Fourier sine transform after reversing the two output signs is included in the Fourier cosine transform and Fourier sine transform.

Note that in order to construct a tomographic image, there is no need to perform signal processing after reversing the output signs when calculating $Y_{t''}^2(z) = Y_{c''}^2(z) + Y_{s''}^2(z)$.

In this embodiment, the optical phase modulator 14 is disposed on the optical path (second optical path) of the reference light, but may be disposed on the optical path (first optical path) of the signal light and measurement light. In this case, Equation (19) changes to the following Equation (e), and therefore, when Equations (40) and (41) are used, or in other words when using the output light intensity serving as a sine function, $\phi = \pi/2$ is set, for example. Further, when using the output light intensity obtained by subjecting the sine function to sign inversion as $\phi = \pi/2$, the "+" or "-" before the second term on the right side of Equations (40) and (41) may be reversed.

$$I_d(k_i) = 2\sqrt{IrIs}\,cos(2L \times k_i - \phi) \quad \cdots\cdots (e)$$

Further, the optical phase modulator 14 may be disposed on both the optical path (first optical path) of the signal light and measurement light and the optical path (second optical path) of the reference light. In this case, when the respective phase modulations of the optical phase modulators 14 are set as $\phi_1$ and $\phi_2$, $I_d k_i = 2 (I_r I_s)^{1/2}COS (2L \times k_i, +\phi_2-\phi_1)$ is obtained. Hence, by selecting $\phi_1$ and $\phi_2$ appropriately, a desired phase difference can be obtained.

A tomographic image can also be constructed using a complex representation corresponding to Equations (40) to (42). More specifically, by calculating the following Equation (43) from gathered data, the absolute value thereof can be obtained.

$$Y^c(z) = \sum_{i=1}^{N}\left\{I_i(k_i,0)-j \times I_i\left(k_i,-\frac{\pi}{2}\right)\right\} \times e^{jk_iz} \quad \cdots\cdots (43)$$

In otherwords, when a single reflection surface is provided, the following Equation (43') is obtained, and the relationship shown in the following Equation (44) is established.

$$Y^c(z) = 2\sqrt{\frac{I_s}{I_r}} \times \sum_{i=1}^{N}\left\{I_i(k_i,0)-j \times I_i\left(k_i,-\frac{\pi}{2}\right)\right\} \times e^{Jk_iz}$$

$$= 2\sqrt{\frac{I_s}{I_r}} \times \sum_{i=1}^{N}\left\{cos(2L \cdot k_i)-j\,sin(2L \cdot k_i)\right\} \times e^{Jk_iz}$$

$$= 2\sqrt{\frac{I_s}{I_r}} \times \sum_{i=1}^{N} e^{-jk_i \cdot 2L} \times e^{-k_iz} = 2\sqrt{\frac{I_s}{I_r}} \times \sum_{i=1}^{N} e^{Jk_i(z-2L)}$$

$$= 2\sqrt{\frac{I_s}{I_r}} \times e^{j\left\{(z-2L)\cdot(k_0+\Delta k\frac{N+1}{2})\right\}} \times \frac{sin\left\{\frac{N\cdot\Delta k\cdot(z-2L)}{2}\right\}}{sin\left\{\frac{\Delta k\cdot(z-2L)}{2}\right\}} \quad \cdots\cdots (43')$$

$$|Y^c(z)|^2 = 4\frac{I_s}{I_r}\left[\frac{sin\left\{\frac{N\cdot\Delta k\cdot(z-2L)}{2}\right\}}{sin\left\{\frac{\Delta k\cdot(z-2L)}{2}\right\}}\right]^2 \quad \cdots\cdots (44)$$

Note that Equations (43) and (44) are substantially identical to the aforementioned calculation process using a trigonometric function, apart from the presentation method thereof, and therefore the same calculations are used to calculate Equations (43) and (44) as those used to calculate Equations (40) to (42).

In the example described above, folding is prevented from occurring in the tomographic image by obtaining the sum total of the cosine function and sine function of $k_i \times (z-2L)$, as shown in Equation (10) and Equation (11), but the sum total of the cosine function and sine function of $k_i \times (z+2L)$ may also be obtained. Note, however, that in this case, the obtained image is a mirror image relative to the origin. The equations corresponding to Equation (40) and Equation (41) are the following Equations (45), (46).

$$^{m}Y_{c}^{''}(z) = \sum_{i=1}^{N} I_i(k_i,0) \times cos(k_i \times z) - \sum_{i=1}^{N} I_i\left(k_i, -\frac{\pi}{2}\right) \times sin(k_i, \times z) \quad \cdots\cdots (45)$$

$$^{m}Y_{s}^{''}(z) = \sum_{i=1}^{N} I_i(k_i,0) \times sin(k_i \times z) + \sum_{i=1}^{N} I_i\left(k_i, -\frac{\pi}{2}\right) \times cos(k_i, \times z) \quad \cdots\cdots (46)$$

In this embodiment, the phase is varied within a single wave number step, but the phase may be fixed, varied after completing a single wave number scan, and then the same wave number scan may be repeated.

In this embodiment, the wave number scan is performed in a stepped fashion, but the scanning sequence need not necessarily be stepped, and all of the required wave numbers may be scanned within a predetermined time period. For example, instead of performing the scan such that the wave number increases sequentially in a stepped fashion, the wave numbers may decrease sequentially, or all of the wave numbers required to construct the tomographic image may be scanned in random order.

In this embodiment, the wave number is varied in the wavelength tunable light source 11 non-continuously (discretely) relative to time by holding the wave number for a fixed period, and the intensity of the interference light is measured within each holding period. However, the wave number may be varied continuously and the intensity of the interference light may be measured every time the wave number reaches a predetermined wave number.

In this embodiment, a Mach-Zender interferometer is used as an interferometer, but the interferometer that may be used is not limited to this type, and another interferometer such as a Michelson interferometer, for example, may be used. Note that when a Michelson interferometer is used, the means for dividing the wavelength tunable light and the means for combining the signal light and reference light are the same.

In this embodiment, the measurement head 40 is applied so that output guidance of the measurement light and input guidance of the signal light can be implemented on the same optical path using the optical circulator 15. However, the optical circulator may be omitted, and two optical fibers may be provided in series in the interior of a main body casing of the measurement head, for example, such that one of the optical fibers guides the measurement light output and the other optical fiber guides the signal light input.

In this embodiment, the phase of the reference light is varied dynamically by the optical phase modulator 14, but the optical path of the reference light may be divided into two, for example, and phase shifting means (for example, a phase modulator with a fixed phase) may be disposed on one of the optical paths so that the phase is shifted statically. Note that in this case, the divided reference beams must both be combined with the signal light, and therefore the signal light is also divided into two such that the divided reference beams and signal beams are combined one-to-one. At this time, the lengths of the optical paths for the divided signal beams are made equal, and the lengths of the optical paths for the divided signal beams are made equal. In so doing, an interference signal serving as a cosine function against the wave number and an interference signal serving as a sine function against the wave number can be obtained simultaneously. The shifted phase is $\pi/2$, for example. Here, when a directional coupler is applied as the means for dividing the light, a phase difference of $\pi/2$ occurs between the beams directly after division, and therefore signal processing must be performed taking the effect of this into account. However, regardless of the combining method, one of the two interference beams forms a cosine function and the other forms a sine function (including a case in which the sign is reversed).

Further, an optical component such as a directional coupler or the like for generating a phase difference of $\pi/2$ in the divided beams may be applied as the phase shifting means, for example. By providing this optical component or the like appropriately on the signal light optical path or the reference light optical path, the phase difference of the combined light can be set at $\pi/2$, for example, and interference light that varies as a cosine function and a sine function against the wave number can be obtained.

(B) Second optical coherence tomography system

(I) Causes of dynamic range deterioration

(a) Possible causes for generation of noise floor

During actual measurement, a noise floor based on the measurement principles described above may be generated, and in addition, a noise floor may be generated by the various types of noise described below.

(1) Thermal noise

Typically, the thermal noise of the amplifiers becomes problematic.

(2) Shot noise

This noise is generated when a current is quantized by a charge elementary quantity of an electron.

(3) A/D board quantization noise and so on

(4) RIN (relative intensity noise)

This noise is generated by fluctuation in the measurement light intensity and reference light intensity due to fluctuation in the laser light intensity accompanying wave number switching, fluctuation from a set wave number value, mechanical/thermal fluctuation in the interferometer, and so on.

(5) Interference noise

This noise is generated by self-interference in the reference light caused by unintended reflection of the reference light, interference between the measurement light and reference light caused by unintended reflection of the measurement light, and so on.

(b) Identification of noise floor generation source

The present inventors discovered, as a result of detailed investigation, that the noise types described above in (1) through (4) are not the main causes of the noise floor described above (to be referred to hereafter as an "excessive noise floor") . The remaining possible cause is (5), i.e. interference noise.
The reference light and measurement light may be reflected at all of the connection points of the optical components constituting the system shown in Fig. 21, and identification of one point is not easy.
However, the present inventors have succeeded, as a result of committed investigation, in identifying the generation source, as is described below.

(1) Step 1: Identifying origin of reflection light

First, an isolator was inserted appropriately to the front and rear of each optical component constituting the measurement system, and an attempt was made to identify the reflection light origin. Fig. 9 shows an outline of a test system, and the constitution thereof will now be described briefly. In the test system, a coupler 102 for dividing light into two is optically connected to a light emission port of a wavelength tunable light source 101. An optical path 103 on one of the divided sides is optically connected to a coupler 106 via a circulator 105, and an optical path 104 on the other divided side is optically connected to the coupler 106 directly. Light supplied by the circulator 105 passes through a collimator lens 107, a galvanometer mirror 108, and a focusing lens 109, and is emitted onto a sample 110. The light that is reflected (backscattered) by the sample 110 passes back through the focusing lens 109, galvanometer mirror 108, and collimator lens 107, and is input into the coupler 106. Two optical paths extending from the coupler 106 for combining the light are optically connected to a photoreceiver 111. The output of the photoreceiver 111 is converted by an A/D converter 112 and input into a computer 113. The output of the wavelength tunable light source 101 is controlled by the computer 113.
Initially, isolators were inserted in sequence in positions a through g shown in Fig. 9, and variation in the noise floor was observed. There was no variation in a, there was no variation in b and c even when a pair of isolators was inserted in these positions, and there was no variation in d and e even when a pair of isolators was inserted in these positions. However, when a pair of isolators was inserted into f and g, a decrease in the noise floor of several dB was observed. This decrease is believed to be the obtained due to the isolators blocking reflection light from a detector in the photoreceiver 111 (corresponding to the first differential amplifier 177 in Fig. 21).

(2) Step 2: Partial removal of RIN

In Fig. 21, the method of setting the division ratio of the third coupler 176 at 50:50 and employing the first differential amplifier 177 is known as a balance detection method, which is known to be an effective method for removing the direct current component of a signal and extracting only the interference signal of (1). However, it is impossible to set the division ratio of the third coupler 176 at precisely 50:50, and even a slight deviation therefrom leads to an increase in the noise floor. Hence, a tunable attenuator (attenuator 114) was inserted in the position, of positions f and g in Fig. 9, in which the direct current component of the output is slightly larger (see Fig. 10), and the attenuation amount was adjusted, whereby an improvement of several dB was observed.

However, the noise floor was still large, and hence the existence of a noise generation source other than interference noise caused by reflection of the reference light or measurement light was ascertained.

(3) Step 3: Effects of cross talk light

As a result of further committed investigation, cross talk remaining between the light reception port and light transmission port of the circulator 105 was found to be the main generation source of the excessive noise floor.

The process of this discovery will now be described.

As shown in Fig. 11, the part in front of the collimator 107 on the optical path extending from the circulator 105 to the measurement subject (sample 110) was removed (i.e. optical connectors (115a, 115b) were removed), and variation in the noise floor was observed. In this state, the optical path of the test light (the optical paths of the measurement light and signal light, i.e. the optical path 103 and an optical path enabling light to pass through the circulator 105, reach the sample 110, be reflected by the sample 110, pass through the circulator 105 again, and reach the coupler 106) is blocked, and the signal light does not reach the combining means constituted by the coupler 106. Therefore, it should be impossible for a noise floor to occur. Surprisingly, however, the noise floor did not decrease even when this measure was taken. To explain this phenomenon, it was assumed that a part of the measurement light entering through a light reception port h of the circulator 105 leaked into a light transmission port j to form leakage light (cross talk light), whereupon this leakage light S1 and the reference light S2 interfered with each other to form a noise floor.

Hence, to block the optical path of the sample light securely, an optical connector 116 disposed after the circulator 105 was removed, and variation in the noise floor was observed. As a result, the noise floor decreased by between ten and twenty dB, and the aforementioned assumption was verified.

No examples of this phenomenon (whereby a noise floor is generated due to leakage of the measurement light into the optical path of the signal light) occurring in an OCT system have been reported in the past. Hence, it would be extremely difficult for a person skilled in the art to foresee cross talk light in the circulator 105 as the cause of an excessive noise floor. It is therefore clear that this phenomenon has been discovered for the first time due to the perceptiveness of the present inventors.

(II) Removal of interference

(1) Reduction of cross talk in circulator

To remove the effects of the cross talk light, cross talk may be eliminated by enhancing the performance of the circulator 105. A circulator often used in the assembly of a fiber optical system was employed, and the cross talk thereof was between 50 and 60dB. By replacing this circulator with a circulator having cross talk of 60dB or more, the noise floor was reduced. Hence, one solution is to use a circulator having cross talk of 60dB or more, preferably 70dB or more, and more preferably 80dB or more.

(2) System constitution taking coherence length into account

However, reducing the cross talk of the circulator 105 is not easy. Therefore, the present inventors decided to strive for a system in which cross talk light generated in the circulator 105 does not contribute to the formation of a noise floor.

To achieve this, the present inventors tried several methods, assuming that the most effective method would be to construct means for preventing the cross talk light from interfering with the reference light. Of these methods, the present inventors found that the simplest and most effective method was to make the difference between the optical path length on the cross talk light side (sample light side) and the optical path length of the reference light S2 greater than the coherence length of the wavelength tunable light source 101 (for example, a semiconductor laser such as an SSG-DBR laser).

Specifically, an optical fiber 118 having a length of 7m (optical path length (optical length) 10m), which is equivalent to the coherence length of the semiconductor laser, was inserted in an optical path mn of the reference light S2, as shown in Fig. 12. Further, to adjust the optical path lengths of the optical path of the sample light and the optical path of the reference light S2, an optical fiber 117 having a length (3.5m) that is half the length of the optical fiber 118 inserted into mn was inserted into kl before a light reception/light transmission port i of the circulator 105. As a result, the noise floor decreased by 15dB. Thanks to this large decrease in the noise floor, it became possible to observe fluctuation in the laser used for measurement, or in other words the RIN. This indicates that interference noise is not the main cause of the noise floor. This large reduction in the noise floor enables a large expansion of the measurable range.

Note that the preferred length of the inserted optical fiber is obtained according to the coherence length of the wavelength tunable semiconductor laser used as a light source. The coherence length of the laser light generated by a semiconductor laser can be measured using an interferometer, for example a Michelson interferometer such as that shown in Fig. 13. When the electric field of light incident on the Michelson interferometer is E (t) and a delay time is $\tau$, an output $i_d$ of a photodetector 121 is as shown in the following Equation (47).

Where

$$i_d \propto \overline{E^2} + \overline{E(t) \cdot E(t+\tau)} \quad \cdots \quad (47)$$

$$\overline{E^2} \equiv \overline{E^2(t)} = \overline{E^2(t+\tau)} \ .$$

Here, the bars inserted above the character expressions indicate a time average. Further, the delay time $\tau$ may be obtained from a distance $L_1$ between a half mirror 122 and a mirror 123 and a distance $L_2$ between the half mirror 122 and a movable mirror 124, using the following Equation (48).

$$\tau = \frac{2|L_1 - L_2|}{c} \quad \cdots \quad (48)$$

Here, c is the speed of light.

Equation (47) is constituted by a component not dependent on $\tau$ and a component dependent on $\tau$. It is known that when the component dependent on $\tau$ is set as $C(\tau)$, this component is expressed by the following Equation (49).

$$C(\tau) \propto 2\cos(\omega_0\tau)\exp(-\tau/\tau_c) \quad \cdots \quad (49)$$

Here, $\omega_0$ denotes the angular frequency of light, and a parameter $\tau_c$ denotes the coherent time of the laser electromagnetic field.

$C(\tau)$ is a term expressing the interference component, and it is evident from Equation (48) and Equation (49) that the envelope of $C(\tau)$ decreases exponentially in relation to the difference "2 $\times$ |$L_1$-$L_2$|" between the sample optical path and reference optical path. Hence, in the present invention, the difference "2 $\times$ |$L_1$-$L_2$|" in optical path length when $C(\tau)$ (the interference signal component dependent on the delay time $\tau$) becomes half of $C(0)$ is defined as the coherence length.

With respect to the above definition, the value of the optical length of the optical fiber 118 inserted into mn is preferably the coherence length (the maximum coherence length of all of the scanned wave numbers; likewise hereafter), more preferably twice the coherence length, even more preferably four times the coherence length, even more preferably eight times the coherence length, and even more preferably sixteen times the coherence length. Note that the preferred value is a value in a case where a fiber is not inserted in mn such that there is no difference in optical path length between the optical path of the sample light and the optical path of the reference light S2.

It was found that the value of the optical path length of the inserted optical fiber (a value obtained by multiplying the refractive index by the length of the route of the light; when the refractive index varies according to location, the sum total of values obtained by multiplying the refractive index at each part by the length of each part) at which the noise floor can actually be reduced effectively using an SSG-DBR laser is preferably at least 5m in mn (at least 2. 5m in kl), more preferably at least 10m in mn (at least 5m in kl), even more preferably at least 20m in mn (10m in kl), and even more preferably at least 40m in mn (20m in kl). The coherence length of an SSG-DBR laser is typical for a semiconductor, and the preferred values of wavelength tunable lasers constituted by other semiconductor lasers are substantially identical.

(3) Constitution of system in which signal light and reference light do not arrive simultaneously

As means for ensuring that the cross talk light does not interfere with the reference light (interference preventing means), means for causing the wavelength tunable light to travel through the interferometer intermittently such that the reference light is extinguished when the cross talk light arrives at the coupler 106, but illuminated when the signal light arrives (intermittent extinguishing means) may be applied instead of means for adjusting the optical path length. To cause the wavelength tunable light to travel intermittently, an optical modulator, for example a Mach-Zender modulator (preferably one in which wavelength chirp does not occur), may be disposed between the SSG-DBR laser 101 and the coupler 102.

SECOND EMBODIMENT

Fig. 14 shows an OFDR-OCT tomographic image capturing system having a reduced noise floor, developed by the present inventors. The measurement subject is the anterior eye portion of a human being.

A light emission port of a wavelength tunable light source 131 serving as wavelength tunable light generating means capable of illuminating light while varying the wavelength thereof, such as super-structure grating distributed Bragg reflector laser light source (Non-patent Document 3), is optically connected to a light reception port of a first coupler 132 constituted by a directional coupler or the like for dividing light into two (at 90:10, for example).

A light transmission port on one side (the 90% divided proportion side) of the first coupler 132 constituted by a directional coupler or the like is optically connected to a light reception port of a second coupler 133 serving as dividing means constituted by a directional coupler or the like for dividing light into two (at 70:30, for example). In other words, the output light of the wavelength tunable light source 131 is divided into a measurement light side (the 70% divided proportion side) and a reference light side (the 30% divided proportion side) .

A light transmission port on one side (the 70% divided proportion side) of the second coupler 133 is optically connected to a light reception port of advancement direction controlling means constituted by a circulator 135 (cross talk between 50 and 60dB). A light transmission port on the other side (the 30% divided proportion side) of the second coupler 133 is optically connected to a light reception port of a third coupler 136 serving as combining means constituted by a directional coupler or the like for dividing light into two (at 50:50, for example).

A light transmission/light reception port of the circulator 135 is connected to a measurement head 150 such as that shown in Fig. 15 via an optical fiber 143 serving as a bi-directional optical path enabling the measurement light and signal light to travel in opposite directions. A light transmission port of the circulator 135 is optically connected to a light reception port of a third coupler 136. In other words, in the circulator 135, the measurement light divided by the second coupler 133 is input into the light reception port, the input measurement light is output to the optical fiber 143 from the light transmission/light reception port, the signal light from the optical fiber 143 is input into the light transmission/light reception port, and the input signal light is output to the third coupler 136 from the light transmission port.

The measurement head 150 also functions as means (measurement light illuminating means) for illuminating the measurement subject with measurement light, and means (signal light collecting means) for collecting signal light formed when the measurement light is reflected or backscattered by an eye 166 serving as the measurement subject (i.e. measurement light illuminating/signal light collecting means).

More specifically, as shown in Fig. 15, the measurement head 150 is constituted by a main body tube 151 provided on a movable stage 161 that is supported on a support 160, supported by the movable stage 161, and formed with a light entrance/exit window 151a in a part of a tip end side peripheral wall thereof, a collimator lens 152 disposed on a base end side of the interior of the main body tube 151 and optically connected to the circulator 135, for shaping the measurement light that has passed through the optical fiber 143 into parallel beams, a galvanometer mirror 153 disposed on a tip end side of the interior of the main body tube 151 and capable of scanning the measurement light in a horizontal direction by changing its orientation direction, and a focusing lens 154 disposed between the collimator lens 152 and galvanometer mirror 153 in the interior of the main body tube 151, for causing the parallel beams to converge on the anterior eye portion.

Further, the support 160 is provided with support arms 162, 163 for fixedly supporting the face of a test subject in a sitting position such that the eye 166 of the test subject remains oriented in a horizontal direction, and attached with a visual confirmation microscope 165 serving as irradiation position confirming means. More specifically, the measurement head 150 is typically mounted in an empty space formed by removing a slit light (narrow gap light) irradiation system from a slit-lamp microscope used for ophthalmologic diagnosis. Using the positioning function of the slit-lamp microscope, measurement light can be guided to the vicinity of a desired position on the eye 166 of the test subject.

In other words, measurement light input into the light reception port of the circulator 135 enters the collimator lens 152 in the interior of the main body tube 151 of the measurement head 150 from the light transmission/light reception port of the circulator 135, is shaped into parallel beams that converge on the focusing lens 154, is emitted from the light entrance/exit window 151a of the main body tube 151 via the galvanometer mirror 153, and impinges on the eye 166. The measurement light incident on the eye 166 is reflected (or backscattered) by the eye 166, forming signal light, and the reflected (or backscattered) signal light enters the interior of the main body tube 151 through the light entrance/exit window 151a, is reflected by the galvanometer mirror 153, passes through the focusing lens 154 and collimator lens 152, and enters the light transmission/light reception port of the circulator 135 from the base end side of the main body tube 151 . The incident signal light is then output from the light transmission port of the circulator 135 and input into the third coupler 136. In the third coupler 136, the signal light and reference light are combined, divided into two (at 50:50, for example), and output.

In the second embodiment, the length of an optical fiber 144 constituting the optical path of the reference light is adjusted such that the optical path length of the reference optical path (division ratio 30%) between the second coupler 133 and third coupler 136 is longer than the sum of the optical path length between the second coupler 133 and circulator 135 and the optical path length between the circulator 135 and third coupler 136 by the maximum coherence length, i.e. 10m, of the wavelength tunable light source 131. In other words, by adjusting the length of the optical fiber 144 appropriately, leakage light from the measurement light, which leaks directly into the light transmission port of the circulator 135 from the light reception port thereof, is prevented from interfering with the reference light (interference preventing means).

Further, the length of the optical fiber 143 between the circulator 135 and the measurement subject is adjusted such that the optical path length between the circulator 135 and the measurement subject is equal to 5m, i.e. half the maximum coherence length of the wavelength tunable light source 131. In other words, by setting the optical path length of the optical fiber 143 to half the optical path length of the optical fiber 144 when the sum of the optical path length between the second coupler 133 and circulator 135 and the optical path length between the circulator 135 and third coupler 136 is equal to the optical path length of the reference optical path (division ratio 30%) between the second coupler 133 and third coupler 136, excluding the optical fiber 144, the sum of the optical path length of the measurement light from the second coupler 133 to the measurement subject (the eye 166) via the circulator 135 and optical fiber 143 and the optical path length of the signal light from the measurement subject (the eye 166) to the third coupler 136 via the optical fiber 143 and circulator 135 is substantially equal to the optical path length of the reference light between the second coupler 133 and third coupler 136.

Further, as shown in Fig. 14, a light transmission port (first output port) on one side of the third coupler 136 is optically connected to a light reception port (first input port) of a first differential amplifier 137 (measuring means) having a light detection function for detecting the intensity of light via an isolator 145 serving as reflection preventing means and an attenuator 147 serving as adjusting means. Further, a light transmission port (second output port) on the other side of the third coupler 136 is optically connected to another light reception port (second input port) of the first differential amplifier 137 via an isolator 146 serving as reflection preventing means. In other words, by inserting the isolators 145, 146 between the first differential amplifier 137 and third coupler 136, light reflected by the first differential amplifier 137 is prevented from returning to the light transmission port of the third coupler 136. A logarithmic output portion of the first differential amplifier 137 is electrically connected to an input portion of a second differential amplifier 138 for correctively calculating variation in the intensity of an input signal.

Meanwhile, a light transmission port on the other side (the 10% divided proportion side) of the first coupler 132 is optically connected to a light reception port of a photodetector 139. An output portion of the photodetector 139 is electrically connected to an input portion of a logarithmic amplifier 140. A logarithmic output portion of the logarithmic amplifier 140 is electrically connected to an input portion of the second differential amplifier 138.

An output portion of the second differential amplifier 138 is electrically connected to an input portion of a calculation control device 141 (identifying means) via an analog/digital converter, not shown in the drawing. The calculation control device 141 determines the position in which the measurement light is reflected or backscattered and the reflection intensity or backscattering intensity in this position from the measured optical intensity, and synthesizes a backscattering intensity distribution in the depth direction of the measurement subject, or in other words a coherence interference waveform. An output portion of the calculation control device 141 is electrically connected to an input portion of a display device 142 such as a monitor or printer for displaying a calculation result. The calculation control device 141 is constituted to be capable of controlling the wavelength tunable light source 131 and the galvanometer mirror 153 on the basis of input information.

In Fig. 14, a tunable attenuator 147 is inserted into one of the two light output ports of the third coupler 136, specifically the light output port on the isolator 145 side. The optical path inserted with the tunable attenuator 147 is obtained in the following manner.

In reality, the division ratio of a usable 3dB coupler is never precisely 50:50. Moreover, the sensitivity of the photodetector in the differential amplifier differs slightly between the two inputs. Hence, as shown in Fig. 16, when the optical path of the signal light is cut in positions 148a, 148b such that only the reference light is input into the third coupler 136, the output of a photodetector (Auto-balancedphotoreceiver) having a differential amplification function is expected to become zero, but does not become zero completely. Therefore, the interference optical path on the side where an optical signal is detected strongly from the sign of the output of the photodetector is identified, and the tunable attenuator 147 is inserted on the identified optical path.

With the optical path of the signal light cut by 148a, 148b, the attenuation rate of the tunable attenuator 147 is adjusted such that the output of the photodetector becomes smaller than the output thereof prior to insertion of the tunable attenuator 147. Alternatively, the attenuation rate of the tunable attenuator 147 may be adjusted while actually observing the A-line (the depth direction scan) such that the noise floor becomes extremely small.

Further, when the intensities of the signal light and reference light are constant regardless of the wave number of the wavelength tunable light source 131, for example, interference light constituted by a first component having a fixed optical intensity against the wave number and a second component having an oscillating optical intensity against the wave number may be output from one of the light transmission ports (the first output port) of the third coupler 136, and interference light constituted by a third component having a fixed optical intensity against the wave number and a fourth component having an oscillating optical intensity against the wave number and an opposite phase to the second component may be output from the other light transmission port (the second output port). The attenuation rate of the tunable attenuator 147 may then be adjusted such that the optical intensity difference between the first component and third component, which is measured by the first differential amplifier 137, decreases.

(Operation Method)

First, using the positioning function of the slit-lamp microscope, the measurement light is guided to the vicinity of a desired position on the eye 166 of the test subject.

Next, a command is issued from the calculation control device 141 to cause the wavelength tunable light source 131 to emit light while varying the wave number thereof in a stepped fashion relative to time (see Fig. 17). Measurement is then performed at each wave number.

Accordingly, the second differential amplifier 138 outputs a signal proportionate to the following Equation (50) in relation to each wave number $k_i$.

$$\log I(k_i, 0) = \log\left[\sqrt{\frac{I_s}{I_r}} \cos(2L \times k_i)\right] \quad \cdots \quad (50)$$

This output is converted into a digital signal by the analog/digital converter, and read by the calculation control device 141. The calculation control device 141 stores the resulting value in association with $k_i$, thereby gradually collecting a set (data) of measurement results for each wave number.

Next, the calculation control device 141 issues a command to the galvanometer mirror 153 to cause the galvanometer mirror 153 to move the wavelength tunable light irradiation position on the surface of the measurement subject slightly along a straight line in the horizontal direction. Similar measurement to that described above is then performed in the new irradiation position. By performing the operation described above repeatedly, the data required to construct a tomographic image are gathered. The number of scanning points in the horizontal direction is set at 100, for example.

When measurement is complete, the calculation control device 141 uses the gathered data to calculate the distribution $Y_t^2(z)$ of the reflection intensity or backscattering intensity in the depth direction for each measurement point on the basis of Equations (2) to (5), and constructs a tomographic image.

In the constructed tomographic image, the noise floor is improved by 5dB through insertion of the isolators 145, 146, by another 5dB through adjustment of the attenuation rate of the tunable attenuator 147, and by 15dB through adjustment of the optical path length, leading to a total reduction of 25dB.

Note that the tunable attenuator 147 may be disposed behind both of the isolators 145, 146. In this case, there is no need to find the output port of the third coupler 136 that outputs the larger interference light in advance.

In the second embodiment, scanning is performed such that the wave number increases in a stepped fashion, but the wave number scan need not necessarily be performed in this manner, and as long as all of the required wave numbers are scanned within a predetermined time period, any scanning method may be employed. For example, instead of performing the scan such that the wave number increases sequentially in a stepped fashion, the wave numbers may decrease sequentially, or all of the wave numbers required to construct the tomographic image may be scanned in random order.

Further, in the second embodiment the tunable attenuator 147 is used to correct an imbalance in the output of the third coupler 136, but a differential amplifier that applies a weighting to the intensity of the input light to remove the difference therein, for example, may be used, as will be described below.

A differential amplifier is typically created so as to output an output $V_0 = \beta (V_2 - V_1)$ commensurate with the difference between two inputs $V_1$ and $V_2$. A circuit having A3 in Fig. 18 and a combination of resistances with four resistance values $R_c$ forms a $\beta=1$ differential amplifier, in which $V_0 = V_{2'} - V_{1'}$.

As a method of making the output of the differential amplifier a weighted subtraction circuit instead of an equivalent subtraction of two input voltages, amplifiers (A1, A2) are inserted in front of a normal differential amplifier, and the degree of amplification is adjusted such that the amplification degrees of the amplifiers (A1, A2) are weighted appropriately, as shown in Fig. 18, for example.

In Fig. 18, $V_{1'}$, $V_{2'}$, and the output voltage $V_0$ are expressed by the following Equation (51).

$$V_1' = -\frac{R_{f1}}{R_{s1}} V_1 \quad , \quad V_2' = -\frac{R_{f2}}{R_{s2}} V_2 \quad , \quad V_0 = \frac{R_{f1}}{R_{s1}} V_1 - \frac{R_{f2}}{R_{s2}} V_2 \quad \cdots \quad (51)$$

By making $R_{f1}$ and $R_{f2}$ tunable resistances, the weight of the voltages $V_1$ and $V_2$ can be varied. Bymeans of this constitution, weighting can be applied to the first component, which is output from one of the light transmission ports (the first output port) of the third coupler 136 and has a fixed optical intensity against the wave number, and the third component, which is output from the other light transmission port (the second output port) of the third coupler 136 and has a fixed optical intensity against the wave number, thereby correcting these components such that the difference therebetween is reduced (adjusting means).

Note that in the second embodiment, logarithmic output is required, but this can be realized easily by a circuit for converting $V_0$ into a logarithm.

In the differential amplifier described above, the gain relating to each input is adjusted to reduce the output of the differential amplifier with the optical path of the signal light cut by 148a and 148b (see Fig. 16). Alternatively, the gain relating to each input may be adjusted while actually observing the A-line (the depth direction scan) such that the noise floor becomes extremely small.


THIRD EMBODIMENT

The third embodiment is an example of a case in which the present invention is applied to an OFDR-OCT system that does not generate a folded image, which has been newly developed by the present inventors (Japanese Patent Application 2005-14650).


(System constitution)

Fig. 19 shows an example of an OFDR-OCT system employing the present invention. The measurement subject is the anterior eye portion of a human being, similarly to the OFDR-OCT system described in the background art.

A light emission port of a wavelength tunable light source 131 serving as wavelength tunable light generating means capable of illuminating light while varying the wavelength thereof, such as super-structure grating distributed Bragg reflector laser light source (Non-patent Document 3), is optically connected to a light reception port of a first coupler 132 constituted by a directional coupler or the like for dividing light into two (at 90:10, for example).

A light transmission port on one side (the 90% divided proportion side) of the first coupler 132 constituted by a directional coupler or the like is optically connected to a light reception port of a second coupler 133 serving as dividing means constituted by a directional coupler or the like for dividing light into two (at 70:30, for example).

A light transmission port on one side (the 70% divided proportion side) of the second coupler 133 is optically connected to a light reception port of a circulator 135 (cross talk between 50 and 60dB) . A light transmission port on the other side (the 30% divided proportion side) of the second coupler 133 is connected to an input of an optical phase modulator 134, and an output of the optical phase modulator 134 is optically connected to one light reception port of a third coupler 136 serving as combining means constituted by a directional coupler or the like for dividing light into two (at 50:50, for example). A device constituted by an LN modulator and a control device thereof may be used as the optical phase modulator, for example.

A light transmission port of the circulator 135 is optically connected to a light reception port of the third coupler 136, and a light transmission/light reception port thereof is connected to a measurement head 150 such as that shown in Fig. 15. The measurement head 150 functions as means for illuminating the measurement subject with measurement light, and means for collecting signal light formed when the measurement light is reflected or backscattered by an eye serving as the measurement subject (i.e. measurement light illuminating/signal light collecting means).

Fig. 15 was described in the second embodiment, and hence detailed description thereof will be omitted. As shown in Fig. 15, the measurement head 150 is constituted by a collimator lens 152 for shaping the measurement light that has passed through an optical fiber 143 into parallel beams, a focusing lens 154 for causing the parallel beams to converge on the anterior eye portion, and a galvanometer mirror 153 for scanning the measurement light in a horizontal direction, and is mounted in an empty space formed by removing a slit light (narrow gap light) irradiation system from a slit-lamp microscope. Using the positioning function of the slit-lamp microscope, the measurement light can be guided to the vicinity of a desired position on an eye 166 of a test subject.

Likewise in the third embodiment, the length of an optical fiber 144 constituting the optical path of the reference light is adjusted such that the optical path length of the reference optical path (division ratio 30%) between the second coupler 133 and third coupler 136 is longer than the sum of the optical path length between the second coupler 133 and circulator 135 and the optical path length between the circulator 135 and third coupler 136 by the maximum coherence length of the wavelength tunable light source 131, i.e. 10m. Further, the length of the optical fiber 143 between the circulator 135 and the measurement subject is adjusted such that the optical path length between the circulator 135 and the measurement subject is equal to 5m, i.e. half the maximum coherence length of the wavelength tunable light source 131. Note that the sum of the optical path length between the second coupler 133 and circulator 135 and the optical path length between the circulator 135 and third coupler 136 is equal to the optical path length of the reference optical path (division ratio 30%) between the second coupler 133 and third coupler 136, excluding the optical fiber 144.

Further, isolators 145, 146 serving as reflection preventing means are inserted between a first differential amplifier 137 having a light detection function and the third coupler 136. Furthermore, a tunable attenuator 147 serving as adjusting means is inserted after one of the isolators connected to the two output ports of the third coupler 136, for example the isolator 145. Note that the optical path on which the tunable attenuator 147 is inserted may be obtained by a similar method to the method described in the second embodiment.

Hence, a light transmission port (first output port) on one side of the third coupler 136 is optically connected to a light receptionport (first input port) of the first differential amplifier 137 (measuring means), which has a light detection function for detecting the intensity of light, via the isolator 145 and the tunable attenuator 147. Further, a light transmission port (second output port) on the other side of the third coupler 136 is optically connected to another light reception port (second input port) of the first differential amplifier 137 via the isolator 146. A logarithmic output portion of the first differential amplifier 137 is electrically connected to one input portion of a second differential amplifier 138 for correctively calculating variation in the intensity of an input signal.

Meanwhile, a light transmission port on the other side (the 10% divided proportion side) of the first coupler 132 is optically connected to a light reception port of a photodetector 139. An output portion of the photodetector 139 is electrically connected to an input portion of a logarithmic amplifier 140. A logarithmic output portion of the logarithmic amplifier 140 is electrically connected to an input portion of the second differential amplifier 138.

An output portion of the second differential amplifier 138 is electrically connected to an input portion of a calculation control device 141 (identifying means) via an analog/digital converter, not shown in the drawing. The calculation control device 141 determines the position in which the measurement light is reflected or backscattered and the reflection intensity or backscattering intensity in this position from the measured optical intensity, and synthesizes a backscattering intensity distribution in the depth direction of the measurement subject, or in other words a coherence interference waveform. An output portion of the calculation control device 141 is electrically connected to an input portion of a display device 142 such as a monitor or printer for displaying a calculation result. The calculation control device 141 is constituted to be capable of controlling the wavelength tunable light source 131, the optical phase modulator 134, and the galvanometer mirror 153 on the basis of input information.

The output of the first differential amplifier 137 takes the logarithmic of $I(k_i, \phi) = 2(I_r I_s)^{1/2}\cos(2L \times k_i + \phi)$. Note that $\phi$ is the phase modulation amount of the optical phase modulator 134. On the other hand, the output of the logarithmic amplifier 140 takes a value proportionate to $\log I_r$, and therefore the output of the second differential amplifier 138 is expressed by the following Equation (52) (a constant term has been omitted).

$$\log\left[\sqrt{\frac{I_s}{I_r}}\cos(2L \times k_i + \phi)\right] \quad \cdots \quad (52)$$

Note that in Equation (52), a single reflection surface exists in the log, and for ease of description, a case in which a single reflection surface is provided will also be considered hereafter.

(Operation method)

A command is issued from the calculation control device 141 to cause the wavelength tunable light source 131 to emit light while varying the wave number thereof in a stepped fashion relative to time (lower portion of Fig. 20).

The calculation control device 141 also issues a command to the optical phase modulator 134 at the same time as the wave number scan command. On the basis of this command, the optical phase modulator 134 modulates the phase of the reference light alternately between 0 (rad, radians) and -π/2 (rad, radians), as shown in the upper portion of Fig. 20, in synchronization with the wave number switching of the wavelength tunable light source 131. In other words, the reference light is phase-modulated by 0 (rad, radians) in the first half period of the wave number holding period, and by -π/2 (rad, radians) in the latter half period.

The second differential amplifier 138 outputs a signal commensurate with the following Equation (53) in the first half of the holding period of each wave number $k_i$.

$$\log\{I(k_i,0)\} = \log\left[\sqrt{\frac{I_s}{I_r}}\cos(2L \times k_i)\right] \quad \cdots \quad (53)$$

The second differential amplifier 138 outputs a signal commensurate with the following Equation (54) in the latter half of the holding period of each wave number $k_i$.

$$\log\left\{I(k_i,-\frac{\pi}{2})\right\} = \log\left[\sqrt{\frac{I_s}{I_r}}\cos(2L \times k_i - \frac{\pi}{2})\right] = \log\left[\sqrt{\frac{I_s}{I_r}}\sin(2L \times k_i)\right] \quad \cdots \quad (54)$$

When the log is removed from the above equations, the following Equations (55), (56) are obtained.

$$I(k_i,0) = \sqrt{\frac{I_s}{I_r}}\cos(2L \times k_i) \quad \cdots \quad (55)$$

$$I(k_i,-\frac{\pi}{2}) = \sqrt{\frac{I_s}{I_r}}\sin(2L \times k_i) \quad \cdots \quad (56)$$

In other words, $I_i$ ($k_i$, 0) becomes a cosine function against the wave number (first output light intensity), and $I_i$ ($k_i$, -π/2) becomes a sine function against the wave number (second output light intensity). Note that output light having an intensity at which the output light becomes a cosine function against the wave number when a single reflection surface is provided, as indicated by $I_i(k_i, 0)$, will be referred to as "output light that varies as a cosine function against the wave number", and output light having an intensity at which the output light becomes a sine function when a single reflection surface is provided, as indicated by $I_i(k_i, -π/2)$, will be referred to as "output light that varies as a sine function against the wave number".

The output is then converted into a digital signal by the analog/digital converter and read by the calculation control device 141. The calculation control device 141 stores the resulting value in association with $k_i$ and $\phi = 0$, -π/2.

Note that $\phi$ may equal π/2, and in this case, signal processing may be performed after reversing the sign of the output. There are substantially no differences between this case and a case in which the sign is not reversed.

Next, the calculation control device 141 issues a command to the galvanometer mirror 153 to move the wavelength tunable light irradiation position on the surface of the measurement subject slightly along a straight line in the horizontal direction. A similar measurement operation to that described above is then performed in the new irradiation position. By performing the operation described above repeatedly, data required to construct a tomographic image are gathered. The number of scanning points in the horizontal direction is set at 100, for example.

When measurement is complete, the calculation control device 141 calculates a distribution $Y_t''^2(z)$ of the reflection intensity or backscattering intensity in the depth direction for each measurement point using the gathered data and in accordance with the following Equations (57) to (59), and constructs a tomographic image on the basis of this distribution.

$$Y_c''(z) = \sum_{i=1}^{N} I_i(k_i, 0) \times \cos(k_i \times z) + \sum_{i=1}^{N} I_i(k_i, -\frac{\pi}{2}) \times \sin(k_i \times z) \quad \cdots \quad (57)$$

$$Y_s''(z) = \sum_{i=1}^{N} I_i(k_i, 0) \times \sin(k_i \times z) - \sum_{i=1}^{N} I_i(k_i, -\frac{\pi}{2}) \times \cos(k_i \times z) \quad \cdots \quad (58)$$

$$Y_t''^2(z) = Y_c''^2(z) + Y_s''^2(z) \quad \cdots \quad (59)$$

Note that the first term of Equation (57) is obtained by subjecting the intensity of the output light that varies as a cosine function against the wave number to Fourier cosine transform. Similarly, the second term of Equation (57) is obtained by subjecting the intensity of the output light that varies as a sine function against the wave number to Fourier sine transform. Further, the first term of Equation (58) is obtained by subjecting the intensity of the output light that varies as a cosine function against the wave number to Fourier sine transform, and the second item of Equation (58) is obtained by subjecting the intensity of the output light that varies as a sine function against the wave number to Fourier cosine transform.

When a single reflection surface or scatterer is provided, the following Equation (60) is obtained.

$$Y_t''^2(z) = 4\frac{I_s}{I_r} \times \left\{ \frac{\sin\left[\frac{(z-2L)}{2} \times N \times \Delta k\right]}{\sin\left[\frac{(z-2L)}{2} \times \Delta k\right]} \right\}^2 \quad \cdots \quad (60)$$

The function expressed in Equation (60) takes a large value at z=2L, and decreases rapidly as it departs from z=2L. A term which generates a folded tomographic image, such as the second term on the right side of Equation (6), does not exist. Hence, a tomographic image exhibiting no folding can be constructed on the basis of Equation (60). Note that z is a variable indicating a positional coordinate, and 2L is a value obtained by subtracting the optical path length of the reference light from the second coupler 133 to the third coupler 136 from the sum of the optical path length of the measurement light from the second coupler 133 to the measurement subject (the eye 166) and the optical path length of the signal light from the measurement subject (the eye 166) to the third coupler 136.

As described in Japanese Patent Application 2005-14650, the calculation described above is used to identify the reflection intensity or backscattering intensity in the depth direction of the measurement subject without folding by calculating, from the first output light intensity and the second output light intensity, functions proportionate to a cosine function and a sine function of $k_i \times (z-2L)$ for each wave number $k_i$ of the output light of the wavelength tunable light source 131 when the measurement subject has only one reflection surface (or scatterer), and then obtaining the sum total of these functions calculated for each wave number $k_i$. Note that functions proportionate to the cosine function and sine function may be calculated in relation to $k_i \times (z+2L)$ rather than $k_i \times (z-2L)$, whereupon the sum total thereof is obtained. In this case, however, the obtained image is a mirror image relative to the origin. Further, functions proportionate to either one of the cosine function and the sine function may be calculated in relation to $k_i \times (z-2L)$ or $k_i \times (z+2L)$, whereupon the sum total thereof is obtained.

When a plurality of reflection surfaces or scatterers is provided, the sum of the terms in the following Equation (61), which corresponds to the signals from the plurality of reflection surfaces (or scatterers), and a term that is small enough to be ignored, is obtained ($2L_i$ is an optical path length difference relative to the $i^{th}$ reflection surface, and M is the number of reflection surfaces). Hence, even when a plurality of reflection surfaces (or scatterers) is provided, a tomographic image exhibiting no folding can be obtained.

$$\sum_{i=1}^{M} \frac{I_s}{I_r} \times \left\{ \frac{\sin\left[\frac{(z-2L_i)}{2} \times N \times \Delta k\right]}{\sin\left[\frac{(z-2L_i)}{2} \times \Delta k\right]} \right\}^2 \quad \cdots \quad (61)$$

In the constructed tomographic image, the noise floor is improved by 5dB through insertion of the isolators 145, 146, by another 5dB through insertion of the tunable attenuator 147 and adjustment of the attenuation rate thereof, and by 15dB through adjustment of the optical path length, leading to a total reduction of 25dB. Note that the tunable attenuator 147 may be disposed behind both of the isolators 145, 146. In this case, there is no need to find the output port of the third coupler 136 that outputs the larger interference light in advance.

In the third embodiment, scanning is performed such that the wave number increases in a stepped fashion, but the wave number scan need not necessarily be performed in this manner, and as long as all of the required wave numbers can be scanned within a predetermined time period, any scanning method may be employed. For example, instead of performing the scan such that the wave number increases sequentially in a stepped fashion, the wave numbers may decrease sequentially, or all of the wave numbers required to construct the tomographic image may be scanned in random order.

Further, in the third embodiment the optical phase modulator for varying the phase of the reference light dynamically is used as means for modulating (shifting) the phase of the reference light, but the optical path of the reference light may be divided into two, and means (for example, a phase modulator with a fixed phase) for shifting the phase statically may be disposed on one of the optical paths. Note that in this case, the divided reference beams must both be combined with the signal light, and therefore the signal light is divided into two such that the divided reference beams and signal beams are combined one-to-one. In so doing, an interference signal that varies as a cosine function against the wave number and an interference signal that varies as a sine function against the wave number can be obtained simultaneously. The shifted phase is $\pi/2$, for example. At this time, the respective optical path lengths of the divided reference beams must be adjusted to be equal. This also applies to the optical path lengths of the divided signal beams. Note that when a directional coupler is used as the means for dividing the light, a phase difference of $\pi/2$ occurs between the beams directly after division, and therefore signal processing must be performed taking the effect thereof into account. However, regardless of the combining method, one of the two interference beams varies as a cosine function and the other varies as a sine function (including a case in which the sign is reversed).

Further, an optical component such as a directional coupler for generating a difference of $\pi/2$ in the phase of the divided beams may be used. By disposing this optical component appropriately on the plurality of signal light optical paths and reference light optical paths, the phase difference following combining can be set at $\pi/2$, for example, and interference light that varies as a cosine function and a sine function against the wave number can be obtained.

Further, a differential amplifier having a gain adjustment function for each input, as described in the third embodiment (Fig. 18), may be used instead of the tunable attenuator.

FOURTH EMBODIMENT

In the second and third embodiments, interference noise caused by cross talk light is eliminated by adjusting the optical path length, but the noise floor may be reduced by reducing the cross talk of the circulator 135 without adjusting the optical path length.

More specifically, in the fourth embodiment, the optical fibers 143, 144 for adjusting the optical path length in the second and third embodiments are not inserted into the reference optical path and so on, and instead, the circulator 135 is switched from a circulator having a cross talk between 50 and 60dB to a circulator having a cross talk between 60 and 70dB. In other words, the circulator 135 reduces leakage light from the measurement light incident on the light reception port by 60dB or more, and therefore serves as interference preventing means for preventing interference between the leakage light and reference light.

In a tomographic image constructed using this constitution, the noise floor is improved by 5dB through insertion of the isolators 145, 146 and 10dB by switching the circulator 135, leading to a total reduction of 15dB.

Note that in the second through fourth embodiments, a Mach-Zender interferometer is used as an interferometer, but the interferometer that may be used is not limited to this type, and another interferometer such as a Michelson interferometer may be used. When a Michelson interferometer is used, the means for dividing the wavelength tunable light and the means for combining the signal light and reference light are the same.

Further, in the second through fourth embodiments, Fourier transform is used to analyze the measurement signal, but Fourier transform does not have to be used, and as long as a large number of frequency components can be extracted from the signal, another analysis method may be used. More specifically, when the reflection light (or backscattered light) from the measurement subject is caused to interfere with the reference light and the optical intensity thereof is measured while varying the wave number, a large number of cosine functions oscillating at a frequency corresponding to the position of the reflection light (or backscattered light) are obtained. Hence, as long as functions having frequency components corresponding to the respective positions can be extracted from the signal, a tomographic image can be constructed. For example, Fourier transform incorporates more general wavelet transform, and the present invention may be applied to a case in which wavelet transform is used to analyze the measurement signal.

Furthermore, in the second through fourth embodiments, an optical circulator is used as the advancement direction controlling means, but another optical element such as a 3dB coupler constituted by a directional coupler or the like, for example, may be used.

In addition, in the second through fourth embodiments, the wave number of the wavelength tunable light source is varied non-continuously (discretely) relative to time, the wave number is held for a fixed period, and the intensity of the interference light is measured within the fixed period. However, it goes without saying that the present invention is also applicable to OCT in which the interference light is measured while varying the wave number continuously, for example chirp OCT (Non-patent Document 4). Further, in the measurement method described in the second through fourth embodiments, the interference light intensity may be measured while varying the wave number continuously, and the output of the photodetector may be sampled after reaching a predetermined wave number. At this time, the S/N ratio is improved by averaging the interference light intensity against the wave numbers in a fixed range centering on a predetermined wave number.

INDUSTRIAL APPLICABILITY

(A) First optical coherence tomography system

The optical coherence tomography system according to the present invention may be produced for use in the manufacturing industry of precision instruments and the like.

(B) Second optical coherence tomography system

The optical coherence tomography system according to the present invention may be used on living organisms and in the manufacturing industry of precision instruments and the like.

**Claims**

1. An optical coherence tomography system comprising:

   wavelength tunable light generating means;
   dividing means for dividing light output from said wavelength tunable light generating means into measurement light and reference light;
   illuminating means for illuminating a measurement subject with said measurement light;
   collecting means for collecting signal light reflected or backscattered by said measurement subject;
   combining means for combining said signal light and said reference light;
   measuring means for measuring an intensity of output light combined by said combining means at each wave number of said wavelength tunable light generating means; and
   identifying means for identifying, on the basis of an intensity set of said output light measured at each wave number, a reflection or backscattering position and a reflection intensity or backscattering intensity of said measurement light in an irradiation direction of said measurement light on said measurement subject, wherein;
   phase shifting means are provided for enabling said measuring means to measure a first intensity serving as a cosine function of said wave number and a second intensity serving as a sine function of said wave number or a reverse-sign function thereof from said intensity of said output light combined by said combining means; and
   said identifying means identify said reflection or backscattering position and said reflection intensity or backscattering intensity of said measurement light in said irradiation direction of said measurement light on said

EP 1 852 692 A1

measurement subject while suppressing generation of a folded image on the basis of a first intensity set and a second intensity set of said output light measured by said measuring means and produced by said phase shifting means.

2. The optical coherence tomography system according to claim 1, wherein, when said measurement subject has only one reflection surface, said identifying means calculate at least one of a cosine function and a sine function of a value of kx (z-2L) or kx(z+2L) (where z is a variable and 2L is a value obtained by subtracting an optical path length of said reference light from a sum of an optical path length of said measurement light and an optical path length of said signal light) for each wave number k of said light that is output from said tunable wavelength light generating means from said first intensity and said second intensity, obtain a proportionate function proportionate to said function, and then obtain a sum total of said proportionate functions calculated for each of said wave numbers k.

3. The optical coherence tomography system according to claim 1 or 2, wherein said identifying means perform a first Fourier cosine transform and a first Fourier sine transform on said first intensity set, perform a second Fourier cosine transform and a second Fourier sine transform on said second intensity component set while maintaining a sign thereof as is when said second intensity varies as a sine function, and perform said second Fourier cosine transform and said second Fourier sine transform on said second intensity set after reversing said sign thereof when said second intensity is a reverse-sign function of a sine function.

4. The optical coherence tomography system according to claim 3, wherein said identifying means obtain a sum of said first Fourier cosine transform and said second Fourier sine transform, obtain a difference between said first Fourier sine transform and said second Fourier cosine transform, and obtain a sum of a square of said sum and a square of said difference.

5. The optical coherence tomography system according to claim 3, wherein said identifying means obtain a difference between said first Fourier cosine transform and said second Fourier sine transform, obtain a sum of said first Fourier sine transform and said second Fourier cosine transform, and obtain a sum of a square of said sum and a square of said difference.

6. The optical coherence tomography system according to claim 3, wherein said identifying means obtain a sum of said first Fourier cosine transform and said second Fourier sine transform, and remove a high frequency component of said sum.

7. The optical coherence tomography system according to claim 3, wherein said identifying means obtain a difference between said first Fourier cosine transform and said second Fourier sine transform, and remove a high frequency component of said difference.

8. The optical coherence tomography system according to any one of claims 1 through 7, wherein said phase shifting means are constituted by an optical phase modulator disposed on an optical path of any one of said measurement light, said reference light, and said signal light.

9. The optical coherence tomography system according to any one of claims 1 through 8, wherein said dividing means are used as both said dividing means and said combining means.

10. The optical coherence tomography system according to any one of claims 1 through 9, wherein said illuminating means are used as both said illuminating means and said collecting means.

11. An optical coherence tomography system comprising:

wavelength tunable light generating means;
dividing means for dividing output light from said wavelength tunable light generating meansinto measurementlight and reference light;
measurement light illuminating/signal light collecting means for illuminating a measurement subject with said measurement light and collecting signal light generated when said emitted measurement light is reflected or backscattered by said measurement subject;
a bi-directional optical path connected to said measurement light illuminating/signal light collecting means, along which said measurement light and said signal light travel in opposite directions;
advancement direction controlling means having a light reception port into which said measurement light divided by said dividing means is input, a light transmission/light reception port from which said input measurement light is output to said bi-directional optical path and into which said signal light is input from said bi-directional optical path, and a light transmission port from which said input signal light is output;

combining means for combining said signal light and said reference light;

measuring means for measuring an intensity of output light from said combining means; and

identifying means for identifying, from an intensity of said output light from said combining means measured by said measuring means, a position in which said measurement light is reflected or backscattered by said measurement subject and a reflection intensity or backscattering intensity in said position in a depth direction of said measurement subject,

wherein interference preventing means are provided for preventing leakage light generated when said measurement light leaks directly from said light reception port into said light transmission port of said advancement direction controlling means from interfering with said reference light.

12. The optical coherence tomography system according to claim 11, wherein said interference preventing means are constituted by an optical path set such that an optical path length of said reference light from said dividing means to said combining means is longer than a sum of an optical path length of said measurement light from said dividing means to said advancement direction controlling means and an optical path length of said signal light from said advancement direction controlling means to said combining means by at least a maximum value of a coherence length of each output light of said wavelength tunable light generating means.

13. The optical coherence tomography system according to claim 12, wherein an optical path length of said bi-directional optical path is set such that a sum of an optical path length of said measurement light from said dividing means to said measurement subject via said advancement direction controlling means and said bi-directional optical path and an optical path length of said signal light from said measurement subject to said combining means via said bi-directional optical path and said advancement direction controlling means is substantially equal to said optical path length of said reference light from said dividing means to said combining means.

14. The optical coherence tomography system according to any one of claims 11 through 13, wherein said interference preventing means constituted by said advancement direction controlling means which attenuate said leakage light from said measurement light incident on said light reception port by at least 60dB.

15. The optical coherence tomography system according to any one of claims 11, 12, and 14, wherein, when said sum of said optical path length of said measurement light from said dividing means to said advancement direction controlling means and said optical path length of said signal light from said advancement direction controlling means to said combining means is different from said optical path length of said reference light from said dividing means to said combining means,

said interference preventing means serve as intermittent extinguishing means for extinguishing output light from said wavelength tunable light generating means intermittently so that said leakage light and said reference light do no enter said combining means simultaneously.

16. The optical coherence tomography system according to any one of claims 11 through 15, wherein:

said combining means comprise:

a first output port for outputting interference light constituted by a first component having a fixed optical intensity against wave numbers and a second component having an optical intensity that oscillates against wave numbers, when an intensity of said signal light and an intensity of said reference light are fixed, regardless of wave numbers of said wavelength tunable light generating means; and

a second output port for outputting interference light constituted by a third component having a fixed optical intensity against wave numbers and a fourth component having an optical intensity that oscillates against wave numbers and an opposite phase to said second component, when said intensity of said signal light and said intensity of said reference light are fixed, regardless of wave numbers; and

said measuring means comprise a first input port to which said first output port is optically connected and a second input port to which said second output port is optically connected, and measure a difference between an intensity of light incident on said first input port and an intensity of light incident on said second input port.

**17.** The optical coherence tomography system according to claim 16, wherein:

reflection preventing means for preventing light reflected by said first input port from returning to said first output port are provided between said first output port and said first input port; and
other reflection preventing means for preventing light reflected by said second input port from returning to said second output port are provided between said second output port and said second input port.

**18.** The optical coherence tomography system according to claim 16 or 17, wherein adjusting means are provided for reducing a difference between said first component and said third component, measured by said measuring means.

**19.** The optical coherence tomography system according to claim 18, wherein:

a tunable optical attenuator is used as said adjusting means; and
said tunable attenuator is disposed at least between said first output port and said first input port or between said second output port and said second input port.

**20.** The optical coherence tomography system according to claim 18, wherein said adjusting means reduce said difference between said first component and said third component by weighting one or both of said intensity of said light incident on said first input port and said intensity of said light incident on said second input port.

**21.** The optical coherence tomography system according to any one of claims 11 through 20, wherein said wavelength tunable light generating means are constituted by a wavelength tunable laser.

**22.** The optical coherence tomography system according to any one of claims 11 through 21, wherein:

said measuring means are means for measuring said intensity of said output light from said combining means at each wave number of said wavelength tunable light generating means, and
said identifying means identify, from an intensity set of said output light from said combining means measured at each of said wave numbers by said measuring means, said position in which said measurement light is reflected or backscattered by said measurement subject, and said reflection intensity or backscattering intensity in said position, in said depth direction of said measurement subject.

**23.** The optical coherence tomography system according to claim 22, wherein said identifying means identify said reflection intensity or backscattering intensity in said depth direction of said measurement subject by subjecting a combination of real numbers constituted by said wave number and said intensity of said output light from said combining means measured at each of said wave numbers by said measuring means and to Fourier transform.

**24.** The optical coherence tomography system according to claim 22, wherein:

said measuring means are capable of measuring both a first output light intensity, in which said intensity of said output light from said combining means varies as a cosine function against said wave number, and a second output light intensity, in which said intensity of said output light from said combining means varies as a sine function against said wave number or a reverse-sign function thereof; and
said identifying means identify, from a first output light intensity set and a second output light intensity set, said position in which said measurement light is reflected or backscattered by said measurement subject and said reflection intensity or backscattering intensity in said position in said depth direction of said measurement subject without folding.

**25.** The optical coherence tomography system according to claim 24, wherein:

when said measurement subject has only one reflection surface, z is a variable indicating a positional coordinate, and 2L is a value obtained by subtracting said optical path length of said reference light from said dividing means to said combining means from said sum of said optical path length of said measurement light from said dividing means to said measurement subject and said optical path length of said signal light from said measurement subject to said combining means;
said identifying means calculate a function proportionate to one or both of a cosine function and a sine function of only one of $kx(z-2L)$ and $kx(z+2L)$ from said first output light intensity and said second output light intensity for each wave number k of said output light of said wavelength tunable light generating means; and

identify said reflection intensity or backscattering intensity in said depth direction of said measurement subject without folding by obtaining a sum total of said functions calculated for each of said wave numbers k.

*FIG. 1*

*FIG.2*

EP 1 852 692 A1

FIG.3

*FIG.4*

Wave Number Switching Time

*FIG.5*

Z

*FIG.6*

*FIG.7*

EP 1 852 692 A1

# FIG.8

FIG.9

EP 1 852 692 A1

EP 1 852 692 A1

*FIG.10*

FIG.11

EP 1 852 692 A1

EP 1 852 692 A1

*FIG.12*

FIG.13

FIG.14

EP 1 852 692 A1

EP 1 852 692 A1

## FIG.15

*FIG.16*

EP 1 852 692 A1

FIG.17

FIG.18

FIG.19

FIG.20

Wave Number Switching Time

FIG.21

EP 1 852 692 A1

EP 1 852 692 A1

*FIG.22*

## FIG.23

D

2L=0            2L=D
(L=0)          (L=D)

## FIG.24

Surface of Measurement Subject

Depth Direction Positional Coordinate(X)

Attenuation Line

The limit to which the signal can be observed is here.

Noise Floor

Logarithm of Signal Intensity

## INTERNATIONAL SEARCH REPORT

| | International application No. |
|---|---|
| | PCT/JP2006/300731 |

**A. CLASSIFICATION OF SUBJECT MATTER**
*G01N21/17*(2006.01)

According to International Patent Classification (IPC) or to both national classification and IPC

**B. FIELDS SEARCHED**

Minimum documentation searched (classification system followed by classification symbols)
G01N21/17

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
JMEDPlus(JDream2), JSTPlus(JDream2)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2004-167080 A (Kimiya SHIMIZU),<br>17 June, 2004 (17.06.04),<br>Full text; all drawings<br>(Family: none) | 11,14-23<br>1-10,12,13,<br>24,25 |
| Y<br>A | JP 2000-262461 A (University Hospital of<br>Cleveland),<br>26 September, 2000 (26.09.00),<br>Full text; all drawings<br>& US 6615072 B1 | 11,14-23<br>1-10,12,13,<br>24,25 |
| Y<br>A | JP 2002-82045 A (Japan Science and Technology<br>Corp.),<br>22 March, 2002 (22.03.02),<br>Full text; all drawings<br>(Family: none) | 17-23<br>1-16,24,25 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 April, 2006 (27.04.06) | 16 May, 2006 (16.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/300731

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-108763 A (Kabushiki Kaisha Seitai Hikarijoho Kenkyusho), 23 April, 1999 (23.04.99), Full text (Family: none) | 1-25 |
| P,A | JP 2005-156540 A (Nippon Telegraph And Telephone Corp.), 16 June, 2005 (16.06.05), Full text (Family: none) | 1-25 |
| E,A | JP 2006-47264 A (Nippon Telegraph And Telephone Corp.), 16 February, 2006 (16.02.06), Full text (Family: none) | 1-25 |
| P,A | JP 2005-283155 A (Kimiya SHIMIZU), 13 October, 2005 (13.10.05), Full text (Family: none) | 1-25 |
| A | Takuji AMANO et al., OFDR with an SSG-DBR laser, Proc. of SPIE, Vol.5531, 02 August, 2004 (02.08.04), pages 375 to 382 | 1-25 |

Form PCT/ISA/210 (continuation of second sheet) (April 2005)

## INTERNATIONAL SEARCH REPORT

| International application No. |
| --- |
| PCT/JP2006/300731 |

**Box No. II          Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III          Observations where unity of invention is lacking (Continuation of item 3 of first sheet)**

This International Searching Authority found multiple inventions in this international application, as follows:
Document 1: JP 2004-167080 A (Kimiya SHIMIZU)
    When compared to Document 1 as a known prior art, the technical feature of the invention of claim 1 is to suppress a folded image by providing phase shift means in the OFDR-OCT while the technical feature of the invention of claim 11 is to provide advancing direction control means in the OFDR-OCT and provide interference preventing means in the advancing direction control means. These inventions have no common feature and different objects.
    Accordingly, the inventions of claims 1-10 and the inventions of claims 11-25 are not so linked as to form a single general inventive concept.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004202957 A

- JP 2005014650 A

**Non-patent literature cited in the description**

- **CHAN KIN PUI.** *OPTRONICS,* 2002, 179
- **T. AMANO ; H. HIRO-OKA ; D. CHOI ; H. FURUKAWA ; F. KANO ; M. TAKEDA ; M. NAKANISHI ; K. SHIMIZU ; K. OBAYASHI.** *Proceeding of SPIE,* 2004, vol. 5531, 375
- **YUZO YOSHIKUNI.** *OYO BUTURI,* 2002, vol. 71, 1362-1366

- Handbook of Optical Coherence Tomography. 364-367
- *Program/Abstract of 40th Japanese Society of Ophthalmological Optics and 19th Japanese Association of Opthalmic ME Joint General Assembly,* 2004, 61